(19) Europäisches Patentamt
European Patent Office
Office européen des brevets

(11) EP 2 457 938 A1

(12) **EUROPEAN PATENT APPLICATION**
published in accordance with Art. 153(4) EPC

(43) Date of publication:
**30.05.2012 Bulletin 2012/22**

(21) Application number: **10802339.1**

(22) Date of filing: **23.07.2010**

(51) Int Cl.:
***C08G 18/65*** *(2006.01)* ***C08G 18/44*** *(2006.01)*
***C08L 75/04*** *(2006.01)* ***C09D 4/06*** *(2006.01)*
***C09D 5/02*** *(2006.01)* ***C09D 175/04*** *(2006.01)*

(86) International application number:
**PCT/JP2010/062419**

(87) International publication number:
**WO 2011/010719 (27.01.2011 Gazette 2011/04)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.07.2009 JP 2009172102**
**08.06.2010 JP 2010131137**
**08.06.2010 JP 2010131139**

(71) Applicant: **UBE INDUSTRIES, LTD.**
**Ube-shi**
**Yamaguchi 755-8633 (JP)**

(72) Inventors:
- **TAKIGAWA, Shinya**
  **Yamaguchi 755-8633 (JP)**
- **NAIKI, Masahiro**
  **Yamaguchi 755-8633 (JP)**
- **YAMADA,Takeshi**
  **Yamaguchi 755-8633 (JP)**

(74) Representative: **Adam, Holger**
**Kraus & Weisert**
**Patent- und Rechtsanwälte**
**Thomas-Wimmer-Ring 15**
**80539 München (DE)**

(54) **AQUEOUS POLYURETHANE RESIN DISPERSION AND METHOD FOR PRODUCING THE SAME**

(57) The invention relates to an aqueous polyurethane resin dispersion having a good dispersibility in an aqueous medium and capable of forming a paint film excellent in strength when cured by ultraviolet light, and an aqueous polyurethane resin dispersion excellent in drying property, having a high hardness and being capable of providing a paint film having a scratch resistance, wherein the polyurethane resin is obtained by reacting at least a polycarbonate polyol (a); an acidic group-containing polyol (b); and an optional polyol (c) other than (a) and (b), with a polyisocyanate (d), and optionally further reacting with a chain extender (B), as well as a paint composition and a coating agent composition containing the same, and a preparation process of the same.

EP 2 457 938 A1

## Description

TECHNICAL FIELD

The present invention relates to an aqueous urethane resin dispersion comprising at least a polyurethane resin and a radically polymerizable compound, and a preparation process for the same, and a use thereof.

BACKGROUND ART

Polycarbonate polyol is a useful compound as a raw material for preparing, by reaction with an isocyanate compound, a polyurethane resin which is used for a rigid foam, flexible foam, paint, adhesive, synthetic leather, ink binder and the like. Furthermore, a paint film obtained by coating an aqueous polyurethane resin dispersion in which polycarbonate polyol is used as a raw material, is known to be excellent in light resistance, heat resistance, hydrolysis resistance and oil resistance (see Patent Document 1).

Among them, a paint film obtained by coating an aqueous urethane resin dispersion in which an aliphatic polycarbonate polyol is used, is known to be used as an undercoating agent because adhesion to a substrate and blocking resistance are improved thereby (see Patent Document 2). When an aliphatic polycarbonate polyol was solely used as a raw material, however, there occurred a problem that the hardness of the paint films obtained from an aqueous polyurethane resin dispersion was not sufficient in the field of paint or in the field of coating agents for outer panels etc. of aircrafts/automobiles and external wall surfaces, flooring materials, etc. of houses.

In order to improve the hardness of paint films, aqueous polyurethane resin dispersions in which a polycarbonate polyol having an alicyclic structure is used are generally proposed (see Patent Documents 3, 4 and 5), but when a polycarbonate polyol having an alicyclic structure is used, dispersibility in an aqueous medium is poor, which, in turn, results in the problem that handleability and stability of the resultant aqueous polyurethane resin dispersions are affeced. Although there exist examples of aqueous polyurethane resin dispersions in which a polycarbonate polyol having an alicyclic structure was used, like, for example, Patent Document 3, no influence on hardness was clarified in this document, and dispersibility in an aqueous medium was also not satisfactory.

Furthermore, aqueous polyurethane resin dispersions in which polycarbonate diol having an alicyclic structure was used, were poor in drying property, and there was a problem that hardness was not enough depending on the drying conditions. Furthermore, when drying hours were prolonged, there occurred the problem that the entire painting step was prolonged, and when the drying temperature was raised, there occurred the problem that there were cases where substrates were affected.

As a method to lower the drying temperature of aqueous polyurethane resin dispersions, there is known a method of forming a paint film at a low drying temperature comprising introducing a photo-curable component in urethane, and photocuring the mixture. Some examples have been reported where this technique was applied to an aqueous polyurethane resin dispersion derived from polycarbonate. The first method is a method of reacting a compound containing at least one isocyanate reactive group with at least one free-radically polymerizable unsaturated group so as to introduce a polymerizable unsaturated bond to an urethane terminal during synthesis of polyurethane (see Patent Document 6). The aqueous polyurethane resin dispersion obtained by this method, however, has the defects that the molecular weight was small and that the physical properties of the paint film before photoirradiation were low.

The second method is a method of obtaining a water dispersion by dispersing a compound containing a free-radically polymerizable unsaturated group into an aqueous polyurethane resin dispersion having a high molecular weight, using a surfactant (see Patent Document 7). Since radically polymerizable compounds also exhibit excellent curing property in the other methods than heating, they are generally recognized as advantageous also in terms of productivity and energy conservation, and in the light of such properties, they are used as an active component for various coatings including metal paints, overcoating agents for various plastic films, wood paints and printing inks as well as adhesives. In this method as well, adhesion, chemical resistance, contamination resistance and elasticity in these applications are improved. In specific combinations, however, there was a problem that hardness after curing of such compositions was not sufficient, and since a surfactant was used, there was also a problem that the surfactant remaining in a paint film was able to lower the paint film performance.

[Patent Documents 1] Japanese Laid-open Patent [Kokai] Publication No. Hei 10-120757
[Patent Documents 2] Japanese Laid-open Patent [Kokai] Publication No. 2005-281544
[Patent Documents 3] Japanese Laid-open Patent [Kokai] Publication No. Hei 6-248046
[Patent Documents 4] Patent Application No. 2008-140474
[Patent Documents 5] Patent Application No. 2008-180856
[Patent Documents 6] Japanese Laid-open Patent [Kohyo] Publication 2008-534710

[Patent Documents 7] Japanese Laid-open Patent [Kokai] Publication No. 2008-248014

DISCLOSURE OF THE INVENTION

Problems to be Solved by the Invention

The object of the invention is to obtain an aqueous polyurethane resin dispersion having a good dispersibility in an aqueous medium and being capable of forming a paint film excellent in strength when cured by ultraviolet light. Furthermore, the object of the invention is to obtain an aqueous polyurethane resin dispersion capable of providing a paint film being excellent in drying property and having a high hardness and a scratch resistance.

Means for Solving the Problem

As a result of intensive and extensive studies for overcoming the aforementioned problems in conventional techniques, the inventors have found that the objects can be achieved by an aqueous polyurethane resin dispersion containing a polyurethane resin and a radically polymerizable compound, wherein a polycarbonate polyol was used as a raw material of the polyurethane resin.

The invention (1) relates to an aqueous polyurethane resin dispersion containing at least a polyurethane resin and a radically polymerizable compound (C),
wherein the polyurethane resin is a polyurethane resin obtained by reacting at least a polycarbonate polyol (a); an acidic group-containing polyol (b); and an optional polyol (c) other than (a) and (b), with a polyisocyanate (d), and optionally further reacting with a chain extender (B).
The invention (2) relates to an aqueous polyurethane resin dispersion of the invention (1), wherein the polycarbonate polyol (a) includes a polycarbonate polyol having an alicyclic structure in the main chain (a1).
The invention (3) relates to an aqueous polyurethane resin dispersion of the invention (2), wherein the content percentage of the alicyclic structure in the polycarbonate polyol (a) is 20 to 65 wt %.
The invention (4) relates to an aqueous polyurethane resin dispersion of any of the inventions (1) to (3), wherein the radically polymerizable compound (C) is a (meth)acrylate compound.
The invention (5) relates to an aqueous polyurethane resin dispersion of any of the inventions (1) to (4), wherein the radically polymerizable compound (C) includes a compound having a polyalkylene glycol structure.
The invention (6) relates to an aqueous polyurethane resin dispersion of any of the inventions (1) to (5), wherein the radically polymerizable compound (C) includes a bifunctional (meth)acrylate compound (C1) and a tri- or more-functional (meth)acrylate compound (C2).
The invention (7) relates to an aqueous polyurethane resin dispersion of any of the inventions (1) to (6), wherein the content of the radically polymerizable compound (C) is 10 to 50 wt % based on 100 wt % of the total solid content of the aqueous polyurethane resin dispersion.
The invention (8) relates to an aqueous polyurethane resin dispersion of any of the inventions (1) to (7), substantially containing no protective colloid, emulsifier, nor surfactant.
The invention (9) relates to an aqueous polyurethane resin dispersion of any of the inventions (1) to (8), wherein the polyurethane resin is a polyurethane resin obtained by reacting at least a polycarbonate polyol (a); an acidic group-containing polyol (b); and an optional polyol (c) other than (a) and (b), with a polyisocyanate (d) to afford a polyurethane prepolymer having no free-radically polymerizable unsaturated group, and further reacting with a chain extender (B).
The invention (10) relates to an aqueous polyurethane resin dispersion of any of the inventions (1) to (10), further containing a photo-initiator.
The invention (11) relates to a paint composition, containing an aqueous polyurethane resin dispersion of any of the inventions (1) to (10).
The invention (12) relates to a coating agent composition, containing an aqueous polyurethane resin dispersion of any of the inventions (1) to (10).
The invention (13) relates to a process for preparing an aqueous polyurethane resin dispersion of any of the inventions (1) to (10) comprising:

the step ($\alpha$1) of reacting a polycarbonate polyol (a), an acidic group-containing polyol (b), and an optional polyol (c) other than (a) and (b), with a polyisocyanate (d) to afford a polyurethane prepolymer (A),
the step ($\beta$) of neutralizing the acidic group of the polyurethane prepolymer (A),
the step ($\gamma$) of dispersing the polyurethane prepolymer (A) and a radically polymerizable compound (C) in an aqueous medium, and
the step ($\delta$) of reacting the polyurethane prepolymer (A) with a chain extender (B) which is reactive to the isocyanate groups of the polyurethane prepolymer (A) to afford an aqueous polyurethane resin.

Effect of the Invention

According to the present invention, provided are an aqueous polyurethane resin dispersion having a good dispersibility in an aqueous medium and being capable of forming a paint film excellent in strength when cured by ultraviolet light, and a preparation process of the same. Furthermore, according to the present invention, an aqueous polyurethane resin dispersion being capable of providing a paint film being excellent in drying property, having a high hardness and a scratch resistance as well as a preparation process of the same are provided. The aqueous polyurethane resin dispersion of the invention can be a raw material for a paint, a coating agent and a paint composition.

BEST MODE FOR CARRYING OUT THE INVENTION

The invention relates to an aqueous polyurethane resin dispersion containing at least a polyurethane resin and a radically polymerizable compound,
wherein the polyurethane resin is a polyurethane resin obtained by reacting at least a polycarbonate polyol (a), an acidic group-containing polyol (b) with a polyisocyanate (d), and optionally further reacting with a chain extender,
and the invention relates to the aqueous polyurethane resin dispersion, wherein the polyurethane resin is a polyurethane resin obtained by reacting at least a polycarbonate polyol (a); an acidic group-containing polyol (b); and a polyol (c) other than (a) and (b) with a polyisocyanate (d), and optionally further reacting with a chain extender (B).

I. Polycarbonate polyol (a)

The polycarbonate polyol (a) (hereinafter also referred to as "(a)") used in the invention is not particularly limited, and it is obtained by carbonate-binding a polyol with a polyol, and it may contain in its molecule an ester bond and the like. The number average molecular weight of the polycarbonate polyol (a) is not particularly limited, and the number average molecular weight is preferably 400 to 8000. When the number average molecular weight is in this range, suitable viscosity and favorable handleability can easily be attained. Furthermore, performance as a soft segment can easily be ensured, and when a paint film is formed using a resultant aqueous polyurethane resin dispersion, occurrence of cracking can easily be inhibited, and furthermore, the polycarbonate polyol (a) is fully reactive to an isocyanate compound (c) to produce an urethane prepolymer efficiently. The number average molecular weight of the polycarbonate polyol (a) is more preferably 400 to 4000.

In the invention, the number average molecular weight refers to a number average molecular weight calculated based on a hydroxyl value measured according to JIS K 1577. Specifically, a hydroxyl value is measured, and then the number average molecular weight is calculated according to a terminal-group analysis using $(56.1 \times 1000 \times \text{valence})$ /hydroxyl value (mgKOH/g). In this formula, valence refers to the number of hydroxyl groups in one molecule, and when the polycarbonate polyol is polycarbonate diol, the valence is 2.

The polycarbonate polyol (a) can be obtained, for example, by reacting one or more polyols with a carbonic acid ester or phosgene. Polycarbonate polyols obtained by reacting one or more polyols with a carbonic acid ester are preferable because of easiness in production and no subgeneration of terminal chlorinated product.

The polyol is not particularly limited and includes, for example, aliphatic polyols, polyols having an alicyclic structure, aromatic polyols, polyester polyols and polyetherpolyols. Herein, the alicyclic structure includes those having a heteroatom such as oxygen atom and nitrogen atom in the ring.

The aliphatic polyol is not particularly limited and includes, for example, aliphatic polyols having a carbon number of 3 to 12. Specifically, it includes linear aliphatic diols such as 1,3-propanediol, 1,4-butanediol, 1,5-pentanediol, 1,6-hexanediol, 1,7-heptanediol, 1,8-octanediol and 1,9-nonanediol; branched aliphatic diols such as 2-methyl-1,3-propanediol, 2-methyl-1,5-pentanediol, 3-methyl-1,5-pentanediol, and 2-methyl-1,9-nonanediol; and tri-or more functional polyalcohols such as 1,1,1-trimethylolpropane and pentaerythritol.

The polyol having an alicyclic structure is not particularly limited and includes, for example, polyols having in the main chain an alicyclic group with a carbon number of 5 to 12. Specifically, there can be mentioned diols having an alicyclic structure in the main chain such as structural isomers or mixtures thereof of 1,4-cyclohexane dimethanol, 1,3-cyclohexane dimethanol, 1,4-cyclohexanediol, 1,3-cyclopentanediol, 1,4-cycloheptanediol, 2,5-bis(hydroxymethyl)-1,4-dioxane, 2,7-norbornanediol, tetrahydrofurandimethanol, 1,4-bis(hydroxyethoxy)cyclohexane, and tricyclodecanedimethanols represented by tricyclo[5.2.1.0$^{2,6}$]decanedimethanol. Among them, 1,4-cyclohexane dimethanol is preferable because of availability.

The aromatic polyol is not particularly limited and includes, for example, 1,4-benzenedimethanol, 1,3-benzenedimethanol, 1,2-benzenedimethanol, 4,4'-naphthalendimethanol and 3,4'-naphthalendimethanol.

The polyester polyol is not particularly limited and includes, for example, polyester polyols of a hydroxy carboxylic acid and a diol, such as a polyester polyol of 6-hydroxy caproic acid and hexanediol, and polyester polyols of a dicarboxylic acid and a diol such as a polyester polyol of adipic acid and hexanediol.

The polyether polyol is not particularly limited and includes, for example, polyethylene glycols (e.g., diethylene glycol, triethylene glycol and tetraethylene glycol) and polyalkylene glycols such as polypropylene glycol and polytetramethylene glycol.

The carbonic acid ester is not particularly limited and includes, for example, aliphatic carbonic acid esters such as dimethyl carbonate and diethyl carbonate; aromatic carbonic acid esters such as diphenyl carbonate; cyclic carbonic acid esters such as ethylene carbonate. In addition, phosgene and the like capable of producing a polycarbonate polyol can also be used. Among them, aliphatic carbonic acid ester is preferable and dimethyl carbonate is particularly preferable because of easiness in production of the polycarbonate polyols.

As the process for producing a polycarbonate polyol from the polyol and carbonic acid ester, there can be mentioned, for example, a method comprising adding in a reactor a carbonic acid ester and a polyol of an excessive mole number with respect to the mole number of the carbonic acid ester, reacting them at a temperature of 160 to 200˚C and at a pressure of around 50 mmHg for 5 to 6 hours, and further at a pressure of several mmHg or less at 200 to 220˚C for several hours. In the reaction, it is preferred that the reaction be carried out while subgenerated alcohol is being taken out from the system. At this time, if carbonic acid ester is gone out of the system by an azetropic reaction with subgenerated alcohol, an excessive amount of carbonic acid ester may be added. Furthermore, a catalyst such as titanium tetrabutoxide may be used in the reaction.

It is preferred that a polycarbonate polyol having an alicyclic structure in the main chain (a1) (hereinafter also referred to as "polycarbonate polyol (a1)" or "(a1)") be used as a polycarbonate polyol (a), since a resultant paint film is excellent in drying property and has a high hardness. Among them, the polycarbonate polyol having an alicyclic structure in the main chain (a1) preferably has a number average molecular weight of 400 to 3000, more preferably 400 to 2000, and particularly preferably 500 to 1000.

The polycarbonate polyol having an alicyclic structure in the main chain (a1) includes, for example, a polycarbonate polyol obtained by reacting a polyol having an alicyclic structure in the main chain with a carbonic acid ester; and a copolymerized polycarbonate polyol obtained by reacting a polyol having an alicyclic structure in the main chain and another polyol (a polyol having no alicyclic structure in the main chain) with a carbonic acid ester. In view of dispersibility of the aqueous dispersion, a copolymerized polycarbonate polyol in which the polyol having no alicyclic structure in the main chain is used in combination is preferable. As the the polyol having no alicyclic structure in the main chain, an aliphatic polyol, an aromatic polyol, a polyester polyol and a polyether polyol may be used, and the above-mentioned specif examples are applicable. Among them, combinations of a polyol having an alicyclic structure in the main chain and an aliphatic polyol are preferable, and a copolymerized polycarbonate polyol obtained by using 1,4-cyciohexanedimethanol and 1,6-hexanediol in combination is particularly preferable.

When the polycarbonate polyol having an alicyclic structure in the main chain (a1) is used, the alicyclic structure-content percentage in the polycarbonate polyol (a) is preferably 20 to 65 wt %. As long as it is in this range, because of the presence of the alicyclic structure, a paint film excellent in hardness can easily be obtained, while situations where the alicyclic structure-content percentage is too large and the viscosity of the prepolymer at the time of manufacture of the aqueous polyurethane resin dispersion is too high, resulting in difficulty in handling, are likely to be avoided. The alicyclic structure-content percentage is more preferably 30 to 55 wt %.

Here, the "alicyclic structure-content percentage" refers to the weight proportion of an alicyclic group in the polycarbonate polyol (a). It refers to a value calculated based, for instance, on a cycloalkane residue such as a cyclohexane residue (in the case of 1,4-hexanedimethanol, the portion of cyclohexane from which two hydrogens atoms are removed), or on an unsaturated heterocycle residue such as a tetrahydrofuran residue (in the case of tetrahydrofurandimethanol, the portion of tetrahydrofuran from which two hydrogens atoms are removed).

The polycarbonate polyol (a) may be used alone or as a combination of plural types thereof For example, a polycarbonate polyol having an alicyclic structure in the main chain (a1) may be used alone, or a polycarbonate polyol having an alicyclic structure in the main chain (a1) and a polycarbonate polyol other than that may be used in combination.

The above-mentioned polycarbonate polyol other than (a1) which can be used in combination with a polycarbonate polyol having an alicyclic structure in the main chain (a1) is not particularly limited, and specifically mentioned are an aliphatic polycarbonate diol such as polytetramethylene carbonatediol, polypentamethylene carbonatediol and polyhexamethylene carbonatediol; an aromatic polycarbonate diol such as poly 1,4-xylylene carbonatediol; a polycarbonate diol as a reaction product of plural types of aliphatic diols with a carbonic acid ester; a copolymerized polycarbonate diol of a polycarbonate diol as a reaction product of an aliphatic diol, an aromatic diol with a carbonic acid ester, and a polycarbonate diol as a reaction product of an aliphatic diol, a dimer diol with a carbonic acid ester; and the like. For example, a combination use of a polycarbonate polyol having an alicyclic structure in the main chain (a1) and an aliphatic polycarbonate polyol may be mentioned.

II. Acidic group-containing polyol (b)

The acidic group-containing polyol (b) (hereinafter also referred to as "(b)") used in the invention is not particularly

limited, as long as it contains two or more hydroxyl groups and one or more acidic groups in a molecule. As the acidic group, carboxy groups, sulfone acid groups, phosphate groups and phenolic hydroxyl groups may be metnioned. In particular, as the acidic group-containing polyol (b), those containing a compound having two hydroxyl groups and one carboxy group in a molecule are preferable. The acidic group-containing polyol (b) may be used alone or as a combination of plural types thereof.

As the acidic group-containing polyol (b), specifically mentioned are: dialkanol alkane acids including dimethylol alkane acids such as 2,2-dimethylolpropionic acid and 2,2-dimethylol butanoic acid; N,N-bishydroxyethyl glycine, N,N-bishydroxyethyl alanine, 3,4-dihydroxy butane sulfonic acid, 3,6-dihydroxy-2-toluene sulfonic acid, acidic group-containing polyether polyols and acidic group-containing polyester polyols. Among them, in view of availability, dialkanol alkane acids containing two alkanol groups are preferable, and alkane acids having a carbon number of 4 to 12 and containing two methylol groups (dimethylol alkane acid) are more preferable, and among the dimethylol alkane acid, 2,2-dimethylolpropionic acid is particularly preferable.

III. Polyol (c) (a polyol other than (a) and (b))

In addition to the polycarbonate polyol (a) and the acidic group-containing polyol (b), a polyol (c) (hereinafter also referred to as "polyol (c)" or "(c)") can be used. As the polyol (c), a high molecular polyol such as a polymeric polyol and a low molecular polyol can be mentioned. As the high molecular polyol, those having a number average molecular weight of 400 to 4000 are included. The polyol may be a diol or a trivalent or more polyalcohol. The polyol (c) may be used alone or as a combination of plural types thereof In view of the fact that the hardness of the paint film is greater, a low molecular polyol is preferable, and among them, a low molecular diol is preferable.

The polymer polyol is not particularly limited, and polyester polyol, polyether polyol, acryl polyol and polydiene polyol can suitably be used.

The polyester polyol is not particularly limited and includes, for example, polyethylene adipate polyol, polybutylene adipate polyol, polyethylene butylene adipate polyol, polyhexamethylene isophthalate adipate polyol, polyethylene succinate polyol, polybutylene succinate polyol, polyethylene sebacate polyol, polybutylene sebacate polyol, poly-ε-caprolactone polyol, poly(3-methyl-1,5-pentylene adipate)polyol, and a polycondensate of 1,6-hexanediol and a dimer acid.

The polyether polyol is not particularly limited and includes, for example, polyethylene glycol, polypropylene glycol, polytetramethylene glycol, random copolymers and block copolymers of ethylene oxide and propylene oxide, and ethylene oxide and butylene oxide. Furthermore, polyether polyester polyol having an ether bond and an ester bond, and the like can be used.

The polydiene polyol is not particularly limited and includes polydiene polyols containing a unit derived from butadiene, isoprene, 1,3-pentadiene, chloroprene, cyclopentadiene or the like. Specific examples of the polydiene polyol includes, for example, hydroxyl group-terminated liquid polybutadiene ("Poly bd" manufactured by Idemitsu Kosan Co., Ltd.), bifunctional hydroxyl group-terminated liquid polybutadiene ("KRASOL" manufactured by Idemitsu Kosan Co., Ltd.), hydroxyl group-terminated liquid polyisoprene ("Poly ip" manufactured by Idemitsu Kosan Co., Ltd.), and hydroxyl group-terminated liquid polyolefin ("Epol" manufactured by Idemitsu Kosan Co., Ltd.).

The polyacryl polyol is not particularly limited and includes, for example, polyacryl polyols obtained by polymerizing
one selected from the group consisting of:

acrylates having an active hydrogen such as 2-hydroxyethyl acrylate, 2-hydroxypropyl acrylate and 2-hydroxybutyl acrylate; or acryl acid monoester or methacrylic acid monoester of glycerine; acryl acid monoester or methacrylic acid monoester of trimethylolpropane; or a mixture thereof;
and
one selected from the group consisting of:
acrylates such as methyl acrylate, ethyl acrylate, isopropyl acrylate, n-butyl acrylate and 2-ethylhexyl acrylate; methacrylates having an active hydrogen such as 2-hydroxyethyl methacrylate, 2-hydroxypropyl methacrylate, 2-hydroxybutyl methacrylate, 3-hydroxypropyl methacrylate and 4-hydroxybutyl methacrylate; or methacrylates such as methyl methacrylate, ethyl methacrylate, isopropyl methacrylate, n-butyl methacrylate, isobutyl methacrylate, n-hexyl methacrylate and lauryl methacrylate; or a mixture thereof,
in the presence or absence of one selected from the group consisting of:
unsaturated carboxylic acid such as acryl acid, methacrylic acid, maleic acid and itaconic acid;
unsaturated amide such as acrylamide, N-methylolacrylamide and diacetone acrylamide; and the other polymerizable monomers such as glycidyl methacrylate, styrene, vinyl toluene, vinyl acetate, acrylonitrile and dibutyl fumarate; or a mixture thereof As the polymerization method, emulsion polymerization, suspension polymerization, dispersion polymerization, solution polymerization and the like can be mentioned. In emulsion polymerization, polymerization

can be made in a stepwise manner.

The low molecular polyol is not particularly limited and includes those having a number average molecular weight of 60 or more and less than 400. For example, there can be mentioned aliphatic diols having a carbon number of 2 to 9 such as ethylene glycol, 1,3-propanediol, 2-methyl-1,3-propanediol, 2,2-dimethyl-1,3-propanediol, 2-butyl-2-ethyl-1,3-propanediol, 1,4-butanediol, 1,5-pentanediol, 3-methyl-1,5-pentanediol, 1,6-hexanediol, 1,9-nonanediol, 2-methyl-1,8-octanediol, diethylene glycol, triethylene glycol and tetraethylene glycol; diols having a carbon number of 6 to 12 and an alicyclic structure such as 1,4-cyclohexane dimethanol, 1,3-cyclohexane dimethanol, 1,4-cyclohexanediol, 1,4-bis(hydroxyethyl)cyclohexane, 2,7-norbornanediol, tetrahydrofurandimethanol and 2,5-bis(hydroxymethyl)-1,4-dioxane; and aromatic diols such as 1,4-benzene methanol, 1,3-benzene methanol and 1,4-dihydroxybenzene. Furthermore, as the low molecular weight polyol, a low molecular weight polyalcohol such as trimethylolpropane, pentaerythritol and sorbitol may be used.

The ratio of a polyol (c) to a polycarbonate polyol (a) is preferably 40 wt % or less. As long as it is in this range, problems including insufficient hardness of the resultant paint film or difficulty in preparing a polyurethane resin water dispersion are likely to be avoided. The proportion of a polyol (c) is more preferably 20 wt % or less.

IV. Hydroxyl equivalent of polyol component

In the invention, the hydroxyl equivalent number in total of a polycarbonate polyol (a), an acidic group-containing polyol (b) and an optional polyol (c) is preferably 100 to 500. As long as the hydroxyl equivalent number is in this range, the manufacture of the aqueous polyurethane resin dispersion is easy, and a favorable storage stability of the aqueous polyurethane resin dispersion and a paint film excellent in hardness can easily be obtained. In view of hardness of the paint film, the hydroxyl equivalent number is preferably 150 to 400, more preferably 180 to 300, and particularly preferably 200 to 270.

The hydroxyl equivalent number can be calculated using the following formulae (1) and (2).

Hydroxyl equivalent number of each polyol = Molecular weight of each polyol/Number of hydroxyl group of each polyol ... (1)

Total hydroxyl equivalent number of polyols = M/total mole number of polyols ... (2)

In formula (2), M represents hydroxyl equivalent number of polycarbonate polyol (a) × mole number of polycarbonate polyol (a)} + {hydroxyl equivalent number of acidic group-containing polyol (b) × mole number of acidic group-containing polyol (b)} + {hydroxyl equivalent number of a polyol (c) ×mole number of a polyol (c)}].

V. Polyisocyanate (d)

The polyisocyanate (d) that can be used in the invention is not particularly limited, and an aromatic polyisocyanate, an aliphatic polyisocyanate, an alicyclic polyisocyanate and the like can be mentioned.

As the aromatic polyisocyanate, specifically included are 1,3-phenylene diisocyanate, 1,4-phenylene diisocyanate, 2,4-tolylenediisocyanate (TDI), 2,6-tolylenediisocyanate, 4,4'-diphenylmethane diisocyanate (MDI), 2,4-diphenylmethane diisocyanate, 4,4'-diisocyanate biphenyl, 3,3'-dimethyl-4,4'-diisocyanate biphenyl, 3,3'-dimethyl-4,4'-diisocyanate diphenylmethane, 1,5-naphthylene diisocyanate, 4,4',4"-triphenylmethane triisocyanate, m-isocyanate phenylsulfonyl isocyanate, and p-isocyanate phenylsulfonyl isocyanate.

As the aliphatic polyisocyanate, specifically included are ethylene diisocyanate, tetramethylene diisocyanate, hexamethylene diisocyanate (HDI), dodeca methylene diisocyanate, 1,6,11-undecane triisocyanate, 2,2,4-trimethyl hexamethylene diisocyanate, lysine diisocyanate, 2,6-diisocyanate methyl caproate, bis(2-isocyanate ethyl)fumarate, bis (2-isocyanate ethyl)carbonate and 2-isocyanate ethyl-2,6-diisocyanate hexanoate.

As the alicyclic polyisocyanate, specifically included are isophorone diisocyanate (IPDI), 4,4'-dicyclohexylmethane diisocyanate (hydrogenated NMI), cyclohexylene diisocyanate, methylcyclohexylene diisocyanate (hydrogenation TDI), bis(2-isocyanate ethyl)-4-cyclohexene-1,2-dicarboxylate, 2,5-norbornane diisocyanate, 2,6-norbornane diisocyanate.

These polyisocyanate may be used alone or as a combination of plural types thereof

While the aforementioned polyisocyanate typically has two isocyanate groups per molecule, a polyisocyanate having three or more isocyanate groups such as triphenylmethane triisocyanate may be used within the range where the polyurethane resin in the invention does not gelate.

Among the aforementioned polyisocyanates, in view of control of reaction, provision of great hardness and strength, etc., 4,4'-diphenylenemethane diisocyanate (MDI), isophorone diisocyanate (IPDI), 4,4'-dicyclohexylmethane diisocyanate (hydrogenated MDI) are preferable.

VI. Polyurethane resin or polyurethane prepolymer (A)

The polyurethane resin in the invention is either a polyurethane resin obtained by reacting at least a polycarbonate polyol (a), an acidic group-containing polyol (b) with a polyisocyanate (d); or a polyurethane resin obtained by reacting a polycarbonate polyol (a), an acidic group-containing polyol (b) with a polyisocyanate (d) to obtain a polyurethane prepolymer (A), and further reacting this with a chain extender (B). The polyurethane resin or polyurethane prepolymer (A) may be a polyurethane resin obtained by reacting the polycarbonate polyol (a), the acidic group-containing polyol (b), a polyol (c) with the polyisocyanate (d); or a polyurethane resin obtained by reacting the polycarbonate polyol (a), the acidic group-containing polyol (b), a polyol (c) with the polyisocyanate (d) to obtain a polyurethane prepolymer (A), and further reacting this with a chain extender (B). In the case where a polyurethane resin is obtained by reacting the polyurethane prepolymer (A) with the chain extender (B), the reaction temperature of the polyurethane prepolymer (A) with the chain extender (B) is, for example, 0 to 80˚C, and preferably 0 to 60˚C.

When the polyurethane resin or polyurethane prepolymer (A) is prepared, assuming that the polycarbonate polyol (a), the acidic group-containing polyol (b) and an optional polyol (c) in total are 100 parts by weight, the ratio of the polycarbonate polyol (a) is preferably 50 to 95 parts by weight, more preferably 70 to 92 parts by weight, and particularly preferably 80 to 90 parts by weight; the ratio of the acidic group-containing polyol (b) is preferably 5 to 25 parts by weight, more preferably 10 to 20 parts by weight, and particularly preferably 12 to 18 parts by weight; and the ratio of the polyol (c) is preferably 0 to 40 parts by weight, more preferably 0 to 30 parts by weight and particularly preferably 0 to 20 parts by weight. As long as the ratio of the polycarbonate polyol (a) is in the above-mentioned range, reduction in hardness of the resultant paint film can be inhibited, and a favorable film forming property can easily be attained. As long as the ratio of the acidic group-containing polyol (b) is in the above-mentioned range, the dispersibility of the resultant aqueous polyurethane resin into an aqueous medium is favorable and a sufficient water resistance of the paint film can easily be attained. As long as the ratio of the polyol (c) is in the above-mentioned range, the ratio of the polycarbonate polyol (a) to the total polyol component will not be relatively too small, or the ratio of the acidic group-containing polyol compound (b) will not be relatively too small, and a favorable hardness of the paint film and dispersibility of the aqueous polyurethane resin can easily be attained.

When the polyurethane resin or polyurethane prepolymer (A) is prepared, the ratio of the mole number of the isocyanate groups of the polyisocyanate (d) to the mole number of the total hydroxyl groups of the polyol component consisting of the polycarbonate polyol (a) and the acidic group-containing polyol (b), or the polyol component consisting of the polycarbonate polyol (a), the acidic group-containing polyol (b) and the polyol (c), is preferably 1.01 to 2.5. As long as it is in this range, the following problems are likely to be avoided: because of the mole number of hydroxyl groups of the polyol component being too large, polyurethane prepolymer (A) having no isocyanate group at a molecular terminal is too much, and molecules which do not react with a chain extender (B) are too many, causing reduction in strength of the paint film obtained by coating the resultant aqueous polyurethane resin dispersion, and also, because of the mole number of hydroxyl groups of the polyol component being too small, a great amount of unreacted polyisocyanate (d) may remain in the reaction system, and may react with a chain extender or with water to cause a molecular elongation, with the result that the paint film obtained by coating the resultant aqueous polyurethane resin dispersion has an uneven surface. The ratio of the mole number of isocyanate groups of the polyisocyanate (d) with respect to the mole number of total hydroxyl groups of the polyol component preferably is 1.2 to 2.2, and particularly preferably 1.2 to 2.0.

When the polyurethane resin or urethane prepolymer (A) is prepared, the reaction of the polyol component comprising the polycarbonate polyol (a), the acidic group-containing polyol (b), and a polyol (c) as needed, with the polyisocyanate (d), may be conducted by reacting (a), (b) and (c) in any order with (d), or the plural types of polyols may be mixed and then reacted with (d).

When the polycarbonate polyol (a) and the acidic group-containing polyol (b) and, the polyol (c) as needed are reacted with the polyisocyanate (d), a catalyst can be used.

The catalyst is not particularly limited and includes, for example, metals and organic and inorganic acid salts such as tin-based catalysts (trimethyl tin laurate, dibutyltin dilaurate or the like) or lead-based catalysts (lead octoate or the like), as well as organometallic derivatives,amine-based catalysts (triethylamine, N-ethyl morpholin, triethylene diamine and the like), and diazabicyclo undecene-based catalysts. Among them, in view of reactivity, dibutyltin dilaurate are preferable.

While the reaction temperature when reacting the polyol component with the polyisocyanate is not particularly

limited, 40 to 150˚C are preferable. When the reaction temperature is too low, the raw materials may not dissolve, and the viscosity of the resultant urethane prepolymer (A) can be too high to stir sufficiently. When the reaction temperature is too high, defects such as side reactions can occur. The reaction temperature is more preferably 60 to 120˚C.

The reaction between the polycarbonate polyol (a) and the acidic group-containing polyol (b) and the polyol (c) as needed, with the polyisocyanate (d), can be made with no solvent or with an organic solvent. As the organic solvent, acetone, methyl ethyl ketone, methyl isobutyl ketone, tetrahydrofuran, dioxane, dimethylformamide, dimethyl sulfoxide, N-methylpyrrolidone, N-ethyl pyrrolidone, ethyl acetate and the like can be mentioned. Among them, acetone, methyl ethyl ketone and ethyl acetate are preferable since they can be removed by heating and decompression after dispersion of polyurethane prepolymer in water and a chain extension reaction. Also, N-methylpyrrolidone and N-ethyl pyrrolidone are preferable since they work as a film formation auxiliary when a paint film is prepared from the resultant aqueous polyurethane resin dispersion. The amount of the organic solvent added is preferably 0.1 to 2.0 times, and more preferably 0.15 to 0.7 times of the total amount of the polycarbonate polyol (a), the acidic group-containing polyol (b), and the polyol (c) as needed in terms of weight.

In the invention, the acid value of the polyurethane resin or polyurethane prepolymer (A) is preferably 10 to 55 mgKOH/g. As long as it is in this range, a favorable dispersibility in an aqueous medium and water resistance of the resultant paint film can easily be attained. The acid value is more preferably 14 to 42 mgKOH/g, and even more preferably 18 to 35 mgKOH/g.

In particular, the acid value of the polyurethane resin or polyurethane prepolymer (A) is an average content of acidic groups in a solid content excluding a solvent used in preparing a polyurethane resin or polyurethane prepolymer (A) as well as a neutralizer for dispersing the polyurethane prepolymer (A) in an aqueous medium, and is determined by the weight of the polyolcarbonate polyol (a), the polyisocyanate (d) and the acidic group-containing polyol (c), as well as the acidic groups contained in the acidic group-containing polyol (c), and can be calculated by the formula below. When an aqueous polyurethane resin dispersion of the invention is prepared by reacting a polycarbonate polyol (a) and a polyisocyanate (d) with an acidic group-containing polyol (c) to obtain a polyurethane prepolymer (A), followed by dispersing the polyurethane prepolymer (A) in a water system solvent and causing a chain extension using a chain extender (B), the above-mentioned acid value is a synonym of the acid value of the polyurethane prepolymer (A).

[Mathematical Formula 1]

$$\text{Acid value} = \frac{\text{Millimole number of Acid group-containing polyol compound x Molecular weight of KOH (56.1)}}{\text{Total weight [g] of (a), (b), (c) and (d)}}$$

In the inventions, the polyurethane prepolymer (A) preferably has no free-radically polymerizable unsaturated group because of the physical properties of the resultant paint film before photoirradiation, in particularl, the tackfree time being short, and preparation of urethane prepolymer being easy.

VII. Chain extender (B)

The chain extender (B) of the invention is reactive to the isocyanate group of the polyurethane prepolymer (A). As the chain extender, there can be mentioned, for example, amine compounds such as ethylenediamine, 1,4-tetramethylenediamine, 2-methyl-1,5-pentanediamine, 1,4-butanediamine, 1,6-hexamethylenediamine, 1,4-hexamethylenediamine, 3-aminomethyl-3,5,5-trimethylcyclohexylamine, 1,3-bis(aminomethyl)cyclohexane, xylylenediamine, piperazine, 2,5-dimethylpiperazine, hydrazine, adipoyldihydrazide, diethylenetriamine and triethylenetetramine; diol compounds such as ethylene glycol, propylene glycol, 1,4-butanediol and 1,6-hexanediol; polyalkylene glycols represented by polyethylene glycol; and water, and among them, preferred is primary diamine compounds. These may be used alone or as a combination of plural types thereof

The amount of the chain extender (B) is preferably an equivalent or less of the isocyanate group which becomes the starting point of chain extension in the resultant polyurethane prepolymer (A), and more preferably 0.7 to 0.99 equivalent of the isocyanate group. When the chain extender (B) was added exceeding the equivalnent of the isocyanate group, the molecular weight of the polyurethane polymer (A) after chain extension decreases, and the strength of the paint film formed by coating the resultant aqueous polyurethane resin dispersion decreases. The chain extender (B) may be added after dispersion of the polyurethane prepolymer into water, or may be added during the dispersion. The chain extension may be carried out with water. In this case, water as a dispersion medium also functions as a chain extender.

VIII. Radically polymerizable compound

While the radically polymerizable compound in the invention is not particularly limited as long as it is polymerized in the copresence of a photoradical generator or in the copresence of a thermal radical generator, it is preferable to use a compound which does not react with an isocyanate group at 25˚C, and a (meth)acrylate compound is particularly preferable. The (meth)acrylate compound includes (meth)acrylate compounds as a monomer, polyurethane (meth) acrylate compounds, polyester (meth)acrylate based compounds, and polyalkylene (meth)acrylate based compounds. (Meth)acrylate herein refers to acrylate and/or methacrylate.

As the (meth)acrylate compounds as a monomer, mono(meth)acrylates and poly(meth)acrylates such as mono (meth)acrylates; and di(meth)acrylates, tri(meth)acrylates, tetra(meth)acrylates, penta(meth)acrylates and hexa(meth) acrylates can be used.

As the mono(meth)acrylates, for example, acryloyl morpholin, 2-ethylhexyl(meth)acrylate, styrene, methyl (meth)acrylate, tetrahydrofurfuryl(meth)acrylate, dodecyl(meth)acrylate, cyclohexyl(meth)acrylate, dicyclopentenyl (meth)acrylate, 2-ethylhexyl(meth)acrylate, dicyclopentenyloxy ethyl(meth)acrylate, phenoxyethyl(meth)acrylate, isobornyl(meth)acrylate and N-vinyl-2-pyrrolidone can be mentioned.

As the di(meth)acrylates, for example, alkylene glycol di(meth)acrylate such as ethylene glycol di(meth)acrylate, propylene glycol di(meth)acrylate, neopentyl glycol di(meth)acrylate, 1,4-butanediol di(meth)acrylate, 1,6-hexanediol di (meth)acrylate, tricyclodecanedimethanol di(meth)acrylate and bisphenol A di(meth)acrylate; polyether di(meth)acrylate such as polyethylene glycol di(meth)acrylate and polypropylene glycol di(meth)acrylate; alkylene oxide-modified di(meth) acrylate such as bisphenol A ethylene oxide-modified di(meth)acrylate, bisphenol A propylene oxide-modified di(meth) acrylate, neopentyl glycol ethylene oxide-modified di(meth)acrylate and neopentyl glycol propylene oxide-modified di (meth)acrylate; and epoxy di(meth)acrylate such as 1,6-hexanediol epoxy di(meth)acrylate, neopentyl glycol epoxy di (meth)acrylate, bisphenol A epoxy di(meth)acrylate, bisphenol A propylene oxide-modified epoxy di(meth)acrylate, phthalic acid epoxy di(meth)acrylate, polyethylene glycol epoxy di(meth)acrylate and polypropylene glycol epoxy di (meth)acrylate can be mentioned.

As the tri(meth)acrylates, for example, trimethylolpropane triacrylate, ethylene oxide-modified trimethylolpropane tri(meth)acrylate, propylene oxide-modified trimethylolpropane tri(meth)acrylate and pentaerythritol tri(meth)acrylate can be mentioned.

As the tetra(meth)acrylates, for example, pentaerythritol tetra(meth)acrylate can be mentioned.
As the penta(meth)acrylates, for example, dipentaerythritol penta(meth)acrylate can be mentioned.
As the hexa(meth)acrylates, for example, dipentaerythritol hexa(meth)acrylate can be mentioned.

Among these (meth)acrylate compounds as a monomer, in view of hardness, poly(meth)acrylate such as di (meth)acrylate, tri(meth)acrylate, tetra(meth)acrylate, penta(meth)acrylate and hexa(meth)acrylate are preferable. This is because as a result of having a plurality of (meth)acryloyl groups in a molecule, a higher molecular weight can easily be attained compared with the case of mono(meth)acrylates.

Furthermore, as the (meth)acrylate compounds as a polymer, those publicly known can be used. In particular, compounds having a polyalkylene glycol structure in a molecule are preferable, and compounds having a polyalkylene glycol structure represented by the following general formula (1) in a molecule are particularly preferable. As a result of having a polyalkylene glycol structure in a molecule, (meth)acrylate compounds as a polymer more easily disperse in an aqueous medium, which enhances the storage stability of the resultant aqueous polyurethane dispersion. Furthermore, when the polyalkylene glycol structure is a structure represented by the following general formula (1), the storage stability of the (meth)acrylate compounds as a polymer per se is high, and the dispersibility in an aqueous medium is high, and thus it is particularly preferred that the polyalkylene glycol structure be the one represented by the following general formula (1):

[Chemical formula 1]

$$-(R-O)_n- \qquad (1)$$

(wherein R represents a linear or branched alkyl group having a carbon number of 2 to 5 which may have a substituent, and n represents an integer of 1 to 10).

The (meth)acrylate compounds as a polymer having a polyalkylene glycol structure in a molecule include, in addition to mono(meth)acrylates, poly(meth)acrylates such as di(meth)acrylates, tri(meth)acrylates and tetra(meth)acrylates.

As the mano(meth)acrylates, for example, polyethylene glycol mono(meth)acrylate, polypropylene glycol mono(meth)acrylate, polyethylene glycol-polypropylene glycol mono(meth)acrylate, poly(ethylene glycol-tetra methylene glycol)mono(meth)acrylate, poly(propylene glycol-tetramethylene glycol)mono(meth)acrylate, methoxy polyethylene glycol mono(meth)acrylate, octoxy polyethylene glycol-polypropylene glycol mono(meth)acrylate, lauroxy polyethylene glycol mono(meth)acrylate, stearoxy polyethylene glycol mono(meth)acrylate, nonylphenoxy polyethylene glycol mono(meth) acrylate, and nonylphenoxy polypropylene glycol polyethylene glycol mono(meth)acrylate can be mentioned.

As the poly(meth)acrylates, for example, polyethylene glycol di(meth)acrylate, polypropylene glycol di(meth) acrylate, polyethylene glycol-polypropylene glycol di(meth)acrylate, poly(ethylene glycol-tetra methylene glycol)di(meth) acrylate, poly(propylene glycol-tetra methylene glycol)di(meth)acrylate, methoxy polyethylene glycol di(meth)acrylate, octoxy polyethylene glycol-polypropylene glycol di(meth)acrylate, lauroxy polyethylene glycol di(meth)acrylate, stearoxy polyethylene glycol di(meth)acrylate, nonylphenoxy polyethylene glycol di(meth)acrylate, nonylphenoxy polypropylene glycol polyethylene glycol di(meth)acrylate, alkylene oxide-modified trimethylolpropane triacrylate (Laromer (Registered Trademark) PO33F manufactured by BASF) such as ethylene oxide (6 mole) modified trimethylolpropane triacrylate (Laromer (Registered Trademark) LR8863 manufactured by BASF) can be mentioned.

Furthermore, as the radically polymerizable compounds, those commercially available may be used as they are. As such commercially available products, for example, Blenmer series manufactured by NOF Corporation and various grades of Laromer (Registered Trademark) manufactured by BASF can be mentioned.

As (meth)acrylates as a polymer other than the compounds having a polyalkylene glycol structure, for example, acryl-based polymers having a polymerizable unsaturated bond at a molecular terminal can be used.
As the acryl-based polymers having a polymerizable unsaturated bond at a molecular terminal, for example, polybutylacrylate ("Actflow BGV-100T" manufactured by Soken Chemical & Engineering Co.,Ltd.) having a polymerizable double bond at one of molecular terminals, and polybutylacrylate ("Actflow" manufactured by Soken Chemical & Engineering Co., Ltd.) having a polymerizable double bond at both molecular terminals, can be mentioned.

The radically polymerizable compound (C) may be used alone or as a combination of plural types thereof.

The ratio of the radically polymerizable compound (C) is preferably 10 to 50 wt % based on 100 wt % of the total solid content of the aqueous polyurethane resin dispersion (including a radically polymerizable compound). As long as it is in this range, the drying property of the resultant paint film is excellent, and a high hardness of the resultant paint film can easily be attained, and furthermore, a favorable storage stability of the aqueous polyurethane resin dispersion can easily be attained. The ratio of the radically polymerizable compound (C) is more preferably 15 to 40 wt %, and particularly preferably 20 to 40 wt %.

The (meth)acryl equivalent of the radically polymerizable compound (C) is preferably 90 to 300. As long as it is in this range, the storage stability of the aqueous polyurethane resin dispersion is favorable, and a paint film with a favorable light resistance and hardness can easily be attained. The (meth)acryl equivalent of the radically polymerizable compound (C) is more preferably 90 to 150. When a plurality of radically polymerizable compounds are used in combination, the sum of the (meth)acryl equivalents of the respective radically polymerizable compounds multiplied by the ratio of the respective radically polymerizable compounds to the total radically polymerizable compounds represents the (meth)acryl equivalent of the radically polymerizable compounds. Furthermore, (meth)acryl equivalent as used herein refers to methacryl equivalent and acryl equivalent, and represented by the following formula.

(Meth)acryl equivalent = (the molecular weight of radically polymerizable compound)/(the number of (meth)acryloyl groups in a molecule)

In the invention, as a radically polymerizable compound (C), a bifunctional (meth)acrylate compound (C1) and a tri- or more-functional (meth)acrylate compound (C2) are preferably used in combination. Here, a "bifunctional (meth) acrylate compound" represents a compound having two (meth)acryloyl groups in one molecule, and a "tri- or more-functional (meth)acrylate compound" refers to a compound having three or more (meth)acryloyl groups in one molecule.

(Bifunctional(meth)acrylate compound (C1))

In the invention, the bifunctional(meth)acrylate compound (C1) is not particularly limited and includes, for example, alkylene glycol di(meth)acrylate such as ethylene glycol di(meth)acrylate, propylene glycol di(meth)acrylate, neopentyl glycol di(meth)acrylate, 1,4-butanediol di(meth)acrylate, 1,6-hexanediol di(meth)acrylate, tricyclodecane dimethanol di(meth)acrylate, and bisphenol A di(meth)acrylate; polyether di(meth)acrylate such as polyethylene glycol di(meth)acrylate and polypropylene glycol di(meth)acrylate; alkylene oxide-modified di(meth)acrylate such as bisphenol A ethylene oxide-modified di(meth)acrylate, bisphenol A propylene oxide-modified di(meth)acrylate, neopentyl glycol ethylene oxide-modified di(meth)acrylate and neopentyl glycolpropylene oxide-modified di(meth)acrylate; epoxy di(meth) acrylate such as 1,6-hexanediol epoxy di(meth)acrylate, neopentyl glycol epoxy di(meth)acrylate, bisphenol A epoxy di(meth)acrylate, bisphenol A propylene oxide-modified epoxy di(meth)acrylate, phthalic acid epoxy di(meth)acrylate, polyethylene glycol epoxy di(meth)acrylate and polypropylene glycol epoxy di(meth)acrylate. Among the bifunctional (meth)acrylate compounds, because of availability, and high rate of consumption of acryloyl groups by photoirradiation resulting in light resistance of the resultant paint film, alkylene glycol di(meth)acrylate and polyethers di(meth)acrylate are preferable, polyether di(meth)acrylate is more preferable, and polypropylene glycol di(meth)acrylate is particularly preferable. These bifunctional(meth)acrylate compounds may be used alone or as a combination of plural types thereof.

As the polypropylene glycol di(meth)acrylate, for example, dipropylene glycol diacrylate (number average molecular weight of 242, e.g. APG-100 manufactured by Shin Nakamura Chemical Co., Ltd.; DPGDA manufactured by DAICEL-CYTEC Company Ltd.), tripropylene glycol diacrylate (number average molecular weight of 300, e.g. Aronix M-220 manufactured by Toagosei Co., Ltd.; APG-200 manufactured by Shin Nakamura Chemical Co., Ltd.; TPGDA manufactured by DAICEL-CYTEC Company Ltd. and the like), heptapropylene glycol diacrylate (number average molecular weight of 536, e.g. Aronix M-225 manufactured by Toagosei Co., Ltd.; APG-400 manufactured by Shin Nakamura Chemical Co., Ltd. and the like; FA-P240A manufactured by Hitachi Chemical Co., Ltd.), undecapropylene glycol diacrylate (number average molecular weight of 808, e.g. Aronix M-270 manufactured by Toagosei Co., Ltd.; APG-700 manufactured by Shin Nakamura Chemical Co., Ltd.; FA-P270A manufactured by Hitachi Chemical Co., Ltd. and the like) can be mentioned. While the number average molecular weight of the polypropylene glycol di(meth)acrylate is not particularly limited, 500 or less is preferable since a hard paint film is obtainable.

Among them, dipropylene glycol diacrylate and tripropylene glycol diacrylate are preferable in view of stability of the polyurethane resin water dispersion, and tripropylene glycol diacrylate is more preferable in view of skin stimulation of the polyurethane resin water dispersion.

(Tri- or more-functional (meth)acrylate compound (C2))

As the tri- or more-functional (meth)acrylate compound (C2), for example, tri(meth)acrylate compounds such as trimethylolpropane triacrylate, ethylene oxide-modified trimethylolpropane tri(meth)acrylate, propylene oxide-modified trimethylolpropane tri(meth)acrylate, pentaerythritol tri(meth)acrylate and tris(acryloyloxy ethyl)isocyanurate; tetra(meth) acrylate compounds such as pentaerythritol tetra(meth)acrylate; penta(meth)acrylate compounds such as dipentaerythritol penta(meth)acrylate; and hexa(meth)acrylate compounds such as dipentaerythritol hexa(meth)acrylate can be mentioned. Among the tri- or more-functional (metla)acrylates, in view of the stability of the polyurethane resin water dispersion, trimethylolpropane tri(meth)acrylate, pentaerythritol tri(meth)acrylate and pentaerythritol tetra (meth)acrylate are preferable, and in view of the amount of consumption of the acryloyl groups when irradiated with ultraviolet light, trimethylolpropane triacrylate, pentaerythritol triacrylate, pentaerythritol tetraacrylate are more preferable. These tri- or more-functional (meth)acrylate compounds may be used alone or as a combination of plural types thereof. For example, tri(meth)acrylate compounds and tetra(meth)acrylate compounds used in combination can be mentioned.

As the tri- or more-functional (meth)acrylate compound (C2), in view of availability and a high hardness of the resultant paint film, tri- or more-functional (meth)acrylate compounds not having two or more ether linkage on average in a molecule are preferable, and tri-functional (meth)acrylate compounds having no ether linkage in a molecule and/or tetra-functional (meth)acrylate compounds having no ether linkage in a molecule are more preferable, and tri(meth) acrylates having no ether linkage in a molecule are particularly preferable. Among the triol triacrylates, in view of availability, trimethylolpropane triacrylate and/or trimethylolpropane trimethacrylate are preferable.

When a bifunctional(meth)acryloyl compound (C1) and a tri- or more-functional (meth)acryloyl compound (C2) are used in combination, the ratio by weight is preferably 5:95 to 95:5. As long as the ratio is in this range, a paint film excellent in hardness and light resistance can easily be obtained. The ratio is more preferably 90:10 to 20:80, and even more preferably 80:20 to 40:60.

IX. Aqueous medium

In the invention, the polyurethane resin is dispersed in an aqueous medium. As the aqueous medium, water or a mixture medium of water and a hydrophilic organic solvent, or the like can be mentioned.

As the water, for example, tap water, ion exchanged water, distilled water, extra pure water can be mentioned. Among them, in view of availability and the fact of particles becoming unstable under the influence of salts, use of ion exchanged water is preferable.

As the hydrophilic organic solvent, lower monohydric alcohols such as methanol, ethanol and propanol; polyalcohols such as ethylene glycol and glycerine; and aprotic hydrophilic organic solvents such as N-methyl morpholin, dimethyl sulfoxide, dimethylformamide and N-methylpyrrolidone can be mentioned. As the amount of the hydrophilic organic solvent in the aqueous medium, 0 to 20 wt % is preferable.

X. Process for preparing aqueous polyurethane resin dispersion

Next, the preparation process of the aqueous polyurethane resin dispersion will be explained.
The process for preparing the aqueous polyurethane resin dispersion of the invention can comprise:

the step ($\alpha$1) of reacting a polycarbonate polyol (a), an acidic group-containing polyol (b) with a polyisocyanate (d) to obtain a polyurethane prepolymer (B);
the step ($\beta$) of neutralizing the acidic group of the polyurethane prepolymer (A);
the step ($\gamma$) of dispersing the polyurethane prepolymer (A) and a radically polymerizable compound (C) in an aqueous medium; and
the step ($\delta$) of reacting the polyurethane prepolymer (A) with the chain extender (B) which is reactive to the isocyanate group of the polyurethane prepolymer (A) to obtain an aqueous polyurethane resin.

Furthermore, the process can comprise the step ($\alpha$2) of reacting a polycarbonate polyol (a), an acidic group-containing polyol (b), a polyol (c) other than (a) and (b) with a polyisocyanate (d) to obtain a polyurethane prepolymer (A);
the step ($\beta$) of neutralizing the acidic group of the polyurethane prepolymer (A);
the step ($\gamma$) of dispersing the polyurethane prepolymer (A) and a radically polymerizable compound (C) in an aqueous medium; and
the step ($\delta$) of reacting the polyurethane prepolymer (A) with a chain extender (B) which is reactive to the isocyanate group of the polyurethane prepolymer (A) to obtain an aqueous polyurethane resin.
The step ($\alpha$1) or ($\alpha$2) of obtaining a polyurethane prepolymer (A) may be carried out in an inert gas atmosphere, or in an atmospheric atmosphere.
Furthermore, as an acidic group neutralizer used in the step ($\beta$) of neutralizing the acidic group of the polyurethane prepolymer (A), organic amines such as trimethylamine, triethylamine, triisopropylamine, tributylamine, triethanolamine, N-methyl diethanolamine, N-phenyl diethanolamine, dimethyl ethanolamine, diethyl ethanolamine, N-methyl morpholin and pyridine; inorganic alkalies such as sodium hydroxide and potassium hydroxide; ammonia; and the like can be mentioned. Among them, organic amines can preferably be used, and more preferably tertiary amines can be used, and most preferably triethylamine can be used.
Here, the acidic group of the polyurethane prepolymer (A) refers to a carboxylic acid group, a sulfone acid group or the like.
In the step ($\gamma$) of dispersing the polyurethane prepolymer (A) and the radically polymerizable compound (C) in an aqueous medium, while the method and the handling order and the like are not particularly limited as long as (A) and (C) can be dispersed in an aqueous medium, for example, a method of adding (C) to (A) and dispersing the mixture in an aqueous medium; a method of adding (A) to (C) and dispersing the mixture in an aqueous medium; a method of dispersing (A) in an aqueous medium, and then mixing and dispersing (C) in the medium; a method of dispersing (C) in an aqueous medium, and then mixing and dispersing (A) in the medium; and a method of dispersing (A) and (C) separately in an aqueous medium and then mixing the two media can be mentioned.
For the mixing, stirring and dispersng, publicly known stirring devices such as homomixer and homogenizer can be used. Furthermore, for the purpose of viscosity adjustment, workability improvement and dispersibility improvement, the above-mentioned hydrophilic organic solvent, water or the like may be added in advance to the polyurethane prepolymer (A) or the radically polymerizable compound (C) before mixing.
Furthermore, it is preferred that the step ($\gamma$) of mixing the polyurethane prepolymer (A) with the radically polymerizable compound (C) be carried out in the presence of oxygen in order to avoid unnecessary consumption of double bonds of the radically polymerizable compound (C). Furthermore, if necessary, a polymerization-inhibitor may be added.
The temperature when mixing the polyurethane prepolymer (A) with the radically polymerizable compound (C) can be 0 to 100˚C in order to avoid unnecessary polymerization of radically polymerizable compounds. The reaction is preferably carried out at 0 to 80˚C. For example, it can be set at 0 to 70˚C and preferably at 50 to 70˚C.
In the preparation process of the invention, the step ($\beta$) of neutralizing the acidic group of the polyurethane prepolymer (A), and the step ($\gamma$) of dispersing the polyurethane prepolymer (A) and the radically polymerizable compound (C) in an aqueous medium, may be carried out in any order, or the two steps can be carried out simultaneously. In this case, (A), (C), an aqueous medium and an acidic group-neutralizer may be mixed at one time, or the acidic group-neutralizer may be mixed with an aqueous medium or (C) beforehand, and then the mixture and (A) may be mixed.
The step ($\gamma$) of dispersing the polyurethane prepolymer (A) and the radically polymerizable compound (C) in an aqueous medium, and the step ($\delta$) of reacting the polyurethane prepolymer (A) with a chain extender (B) to obtain an aqueous polyurethane resin, can be carried out simultaneously.
In this case, (A), (B), (C) and an aqueous medium may be mixed at one time, or (B) may be mixed in an aqueous medium beforehand, and then the mixture may be mixed with (A) and (C).
The step ($\beta$) of neutralizing the acidic group of the polyurethane prepolymer (A), the step ($\gamma$) of dispersing the polyurethane prepolymer (A) and the radically polymerizable compound (C) in an aqueous medium, and the step ($\delta$) of

reacting the polyurethane prepolymer (A) with a chain extender (B) to obtain an aqueous polyurethane resin, can be carried out simultaneously. In this case, (A), (B), (C), the acidic group-neutralizer and an aqueous medium may be mixed at one time, or (B) and the acidic group-neutralizer may be mixed in an aqueous medium or (C) beforehand, and then the mixture may be mixed with (A) and (C).

In the step (δ) of reacting the polyurethane prepolymer (A) with the chain extender (B) which is reactive to the isocyanate group of the polyurethane prepolymer (A) to obtain an aqueous polyurethane resin, the reaction may be carried out slowly while cooling, or in some cases, the reaction may be accelerated under a heating condition of 60˚C or less. The reaction time while cooling can be about 0.5 to 24 hours, and reation time under a heating condition of 60˚C or less is about 0.1 to 6 hours.

The ratio of the polyurethane resin in the aqueous polyurethane resin dispersion is preferably 5 to 60 wt %, more preferably 20 to 50 wt %, and even more preferably 15 to 20 wt %. Furthermore, the number average molecular weight can be set at 10,000 to 1,000,000.

XI. Photo-initiator

A photo-initiator can be added to the aqueous polyurethane resin dispersion of the invention.
As the photo-initiator, commonly used ones can be used, for example, a photo-fragmentation type in which cleavage easily occurs by ultraviolet irradiation to produce two radicals and/or a hydrogen abstraction type, or a mixture of these can be used. As these compounds, for example, acetophenone, 2,2-diethoxy acetophenone, p-dimethylamino acetophenone, benzophenone, 2-chlorobenzophenone, p,p'-bis diethylamino benzophenone, benzoin ethyl ether, benzoin n-propyl ether, benzoin isopropyl ether, benzoin isobutyl ether, benzoin n-butyl ether, benzoin dimethyl ketal, thioxanthone, p-isopropyl-α-hydroxy isobutyl phenone, 2,2-dimethoxy-2-phenyl acetophenone, 1-hydroxy cyclocyclohexyl phenyl ketone, 2-methyl-1[4-(methylthio)phenyl]-2-morpholinopropan-1-one, 2-hydroxy-2-methyl-1-phenyl propan-1-one, 2,4,6,-trimethyl benzophenone, 4-methyl benzophenone, 2,2-dimethoxy-1,2-diphenyl ethanone can be mentioned. Preferably, hydroxycyclohexyl phenyl ketone can be mentioned.

When the photo-initiator is added, it is preferably added after the step (δ) of reacting the polyurethane prepolymer (A) with the chain extender (B) which is reactive to the isocyanate group of the polyurethane prepolymer (A) to obtain an aqueous polyurethane resin.
The amount of the photo-initiator is preferably 0.5 wt % to 5 wt % based on the total solid content of the aqueous polyurethane resin dispersion (including a radically polymerizable compound).

XII. Additives

Furthermore, additives can be added, if necessary, to the aqueous polyurethane resin dispersion of the invention and such additives include a thickener, a photosensitizer, a curing catalyst, an ultraviolet absorber, a photostabilizer, an antifoamer, a plasticizer, a surface conditioner, and an antisettling agent. Such additives may be used alone or as a combination of plural types. It is preferred that the aqueous polyurethane resin dispersion of the invention contain substantially no protective colloid, emulsifier nor surfactant in view of hardness and chemical resistance of the resultant paint film.

The paint composition and coating agent of the invention are a paint composition and coating agent containing the aqueous polyurethane resin dispersion.
In addition to the aqueous polyurethane resin dispersion, other resins can be added to the paint composition and coating agent of the invention. As the other resins, polyester resin, acryl resin, polyethers resin, polycarbonate resin, polyurethane resin, epoxy resin, alkyd resin, polyolefin resin and the like can be mentioned. These may be used alone or as a combination of plural types thereof
Furthermore, the other resins preferably have one kind or more hydrophilic groups. As the hydrophilic groups, hydroxyl groups, carboxy groups, sulfone acid groups, polyethylene glycol groups and the like can be mentioned.

As the other resins, at least one type selected from the group consisting of polyester resin, acryl resin and polyolefin resin is preferable.

The polyester resin can typically produced by esterification or transesterification of an acid component with an alcohol component.
As the acid component, a compound typically used as an acid component in producing a polyester resin can be used. As the acid component, for example, aliphatic polybasic acid, alicyclic polybasic acid, aromatic polybasic acid and the like can be used.
The hydroxyl value of the polyester resin is preferably about 10 to 300 mgKOH/g, more preferably about 50 to 250 mgKOH/g, and even more preferably about 80 to 180 mgKOH/g. The acid value of the polyester resin is preferably about 1 to 200 mgKOH/g, more preferably about 15 to 100 mgKOH/g, and even more preferably about 25 to 60 mgKOH/g. The weight average molecular weight of the polyester resin is preferably 500 to 500,000, more preferably 1,000 to

300,000, and even more preferably 1,500 to 200,000.

As the acryl resin, a hydroxyl group-containing acryl resin is preferable. The hydroxyl group-containing acryl resin can be prepared by copolymerizing a hydroxyl group-containing polymerizable unsaturated monomer with another polymerizable unsaturated monomer which is copolymerizable with the hydroxyl group-containing polymerizable unsaturated monomer by a well-known method, for example, a solution polymerization method in an organic solvent or an emulsion polymerization method in water.

The hydroxyl group-containing polymerizable unsaturated monomer is a compound having one or more hydroxyl groups and one or more polymerizable unsaturated bonds in a molecule. For example, a monoesterified compound of a dihydric alcohol having a carbon number of 2 to 8 and a (meth)acryl acid such as 2-hydroxyethyl(meth)acrylate, 2-hydroxypropyl (meth)acrylate, 3-hydroxypropyl(meth)acrylate and 4-hydroxybutyl(meth)acrylate; an ε-caprolactone modified product of these monoesterified compounds; N-hydroxymethyl(meth)acrylamide; an allyl alcohol; and a (meth)acrylate having a polyoxyethylene chain whose molecular terminal is a hydroxyl group, can be mentioned.

It is preferred that the hydroxyl group-containing acryl resin have a cationic functional group.

The hydroxyl group-containing acryl resin having a cationic functional group can be produced by, for example, using a polymerizable unsaturated monomer having a cationic functional group such as a tertiary amino group and a quarternary ammonium salt group as one of the polymerizable unsaturated monomers.

The hydroxyl value of the hydroxyl group-containing acryl resin is, in view of the storage stability of the aqueous polyurethane resin dispersion and water resistance of the resultant paint film, etc., preferably about 1 to 200 mgKOH/g, more preferably about 2 to 100 mgKOH/g and even more preferably 3 to 60 mgKOH/g.

Furthermore, when the hydroxyl group-containing acryl resin has an acid group such as a carboxyl group, the acid value of the hydroxyl group-containing acryl resin is, in view of water resistance of the resultant paint film etc., preferably about 1 to 200 mgKOH/g, more preferably about 2 to 150 mgKOH/g and even more preferably about 5 to 100 mgKOH/g.

The weight average molecular weight of the hydroxyl group-containing acryl resin is preferably within the range of 1,000 to 200,000, more preferably 2,000 to 100,000 and even more preferably 3,000 to 50,000.

As the polyethers resin, polymers or copolymers having an ether linkage can be mentioned, and, for example, polyethers derived from aromatic polyhydroxy compounds such as polyoxyethylene-based polyethers, polyoxypropylene-based polyethers, polyoxybutylene-based polyethers, bisphenol A or bisphenol F can be mentioned.

As the polycarbonate resin, polymers prepared from bisphenol compounds can be mentioned, and, for example, bisphenol A polycarbonate can be mentioned.

As the polyurethane resin, resins having an urethane bond obtained by reacting various polyol components such as acryl, polyester, polyether and polycarbonate with polyisocyanate can be mentioned.

As the epoxy resin, resins obtained by reacting a bisphenol compound with an epichlorohydrin and the like can be mentioned. As the bisphenol, for example, bisphenol A and bisphenol F can be mentioned.

As the alkyd resin, alkyd resins obtained by reacting a polybasic acid such as phthalic acid, terephthalic acid and succinic acid with a polyalcohol, and further with a modifier such as oil/oil fatty acid (soybean oil, linseed oil, coconut oil, stearic acid, etc.) and natural resin (rosin, succinite, etc.) can be mentioned.

As the polyolefin resin, resins obtained by water-dispersing, using an emulsifier, a polyolefin resin obtained by polymerizing or copolymerizing an olefin-based monomer suitably with another monomer by a common polymerization method, or by emulsion-polymerizing an olefin-based monomer suitably with another monomer, can be mentioned. Furthermore, optionally, a so-called chlorinated polyolefin-modified resin obtained by chlorinating the polyolefin resin may be used.

As the olefin-based monomer, for example, α-olefins such as ethylene, propylene, 1-butene, 3-methyl-1-butene, 4-methyl-1-pentene, 3-methyl-1-pentene, 1-heptene, 1-hexene, 1-decene and 1-dodecen; and conjugated dienes or non-conjugated dienes such as butadiene, ethylidene norbornane, dicyclo pentadiene, 1,5-hexadiene and styrenes can be mentioned, and these monomers may be used alone or as a combination of plural types thereof.

As the monomer copolymerizable with an olefin-based monomer, for example, acetic acid vinyl, vinyl alcohol, maleic acid, citraconic acid, itaconic acid, maleic acid anhydride, citraconic acid anhydride and itaconic acid anhydride can be mentioned, and these monomers may be used alone or as a combination of plural types thereof

By causing the paint composition and coating agent of the invention to contain a curing agent, it is possible to enhance water resistance etc. of a paint film or multi-layer paint film or coating film in which the paint composition or the coating agent is used.

As the curing agent, for example, amino resin, polyisocyanate, blocked polyisocyanate, melamine resin and carbodiimide may be used. Only one type curing agent may be used, or a plural types may be used in combination.

As the amino resin, for example, a partially or completely methyloled amino resin obtained by reacting an amino component and an aldehyde component can be mentioned. As the amino component, for example, melamine, ureas, benzoguanamine, acetoguanamine, steroguanamine, spyroguanamine and dicyandiamide can be mentioned. As the aldehyde component, for example, formaldehyde, paraformaldehyde, acetaldehyde and benzaldehyde can be mentioned.

As the polyisocyanate, for example, compounds having two or more isocyanate groups in a molecule can be mentioned, and for example, hexamethylene diisocyanate and trimethyl hexamethylene diisocyanate can be mentioned.

As the blocked polyisocyanate, those obtained by adding a blocking agent to the polyisocyanate group of the above-mentioned polyisocyanate can be mentioned, and as the blocking agent, those including phenol-based blocking agents such as phenol and cresol; aliphatic alcohol-based blocking agents such as methanol and ethanol; active methylene-based blocking agents such as dimethyl malonate and acetyl acetone; mercaptan-based blocking agents such as butyl mercaptan and dodecyl mercaptan; acid amide-based blocking agents such as acetanilide and acetic acid amide; lactam-based blocking agents such as ε-caprolactam and δ-valerolactam; acid imide-based blocking agents such as succinimide and maleimide; oxime-based blocking agents such as acetaldoxime, acetone oxime and methylethylketoxime; and amine-based blocking agents such as diphenyl aniline, aniline and ethyleneimine, can be mentioned.

As the melamine resin, for example, methylolmelamines such as dimethylol melamine and trimethylolmelamine; alkyl etherified products or condensation products of these methylolmelamines; condensation products of alkyl etherified products of methylolmelamines and the like can be mentioned.

As the paint composition and coating agent of the invention, a coloring pigment, an extender pigment and a lustrous pigment can be added.

As the coloring pigment, for example, titanium oxide, zinc white, carbon black, molybdenum red, prussian blue, cobalt blue, azo pigment, phthalocyanine pigment, quinacridone pigment, isoindoline pigment, threne-based pigment and perylene pigment can be mentioned. These may be used alone or as a combination of plural types thereof In particular, it is preferred that titanium oxide and/or carbon black be used as a coloring pigment.

As the extender pigment, for example, clay, kaolin, barium sulfate, barium carbonate, calcium carbonate, talc, silica and alumina white can be mentioned. These may be used alone or as a combination of plural types thereof In particular, as the extender pigment, barium sulfate and/or talc is preferably used, and barium sulfate is more preferably used.

As the lustrous pigment, for example, aluminium, copper, zinc, brass, nickel, aluminium oxide, mica, aluminium oxide coated with titanium oxide or iron oxide, and mica coated with titanium oxide or iron oxide can be used.

The paint composition and coating agent of the invention can contain, if necessary, commonly used additives for paint such as a thickener, a curing catalyst, an ultraviolet absorber, a photostabilizer, an antifoamer, a plasticizer, a surface conditioner, and an antisettling agent. These may be used alone or as a combination of plural types thereof

The preparation process of the paint composition and coating agent of the invention is not particularly limited, and a publicly known preparation process can be used. Typically, the paint composition and the coating agent is prepared by mixing the aqueous polyurethane resin dispersion with the above-mentioned various additives, adding an aqueous medium, and adjusting the viscosity according to the particular coating method.

As the subject material to be painted by the paint composition or as the subject material to be coated by the coating agent, metal, plastic, inorganic matter, wood and the like can be mentioned.

As the painting method of the paint composition or the coating method of the coating agent, bell coating, spray coating, roll coating, shower coating, dipping coating and the like can be mentioned.

[Example]

Next, the invention will be explained in more details by way of Examples and Comparative Examples.

[Example 1]

(Preparation of the aqueous polyurethane resin dispersion)

To a reactor equipped with a stirrer and a heater were added 136.3 g (0.149 mole) of ETERNACOLL (Registered Trademark) "UM-90 (3/1)" (a polycarbonate diol prepared using 1,6-hexanediol, 1,4-cyclohexane dimethanol and a carbonic acid ester as raw materials, molar mass: 915 g/mol, hydroxyl value: 122.5 mgKOH/g) manufactured by Ube Industries, Ltd. and 117.7 g of NMP (N-methyl-2-pyrrolidone) while introducing nitrogen. Then stirred at 70˚C. Next, 130.8 g (0.499 mole) of hydrogenated MDI was stirred at 80˚C for 1.5 hours. Then, 20.6 g (0.154 mole) of dimethylolpropionic acid and 0.3 g of dibutyltin dilaurate as a catalyst were added and reacted at 90˚C for 5 hours to produce a prepolymer (at this time, the amount of the carboxylic acid group contained in the prepolymer was 2.45 wt % and the hydroxyl equivalent number was 259). After completion of the urethanation reaction, the reaction mixture was cooled to 70˚C, and to this was added 14.8 g (0.146 mole) of triethylamine and 38.1 g of Laromer LR8863 (a radically polymerizable compound manufactured by BASF) to obtain a prepolymer before water dispersion. This mixture was added under vigorous stirring into 428.4 g of water. Then, 46.6 g (0.140 mole) of a 35 wt % aqueous 2-methyl-1,5-pentanediamine solution was added to cause a chain extension reaction to obtain an aqueous polyurethane resin dispersion.

[Example 2]

To the aqueous polyurethane dispersion synthesized in Example 1 was added 2 wt %/solid content of a polymerization initiator (IRGACURE 819, manufactured by Ciba Specialty Co., Ltd.), and stirred well to obtain a coating agent. This was coated on a glass plate, dried at 60˚C for 30 minutes, and then the plate was passed under a 80W metal halide lamp (lamp height: 10 cm, transportation velocity: 2.2 mm/min, one time irradiation, ultraviolet radiation intensity: 1300 mJ/$cm^2$) so as to cure the coated surface to obtain a coated film of 27 μm.

[Comparative Example 1]

To a glass separable flask having an inner volume of 1 l and eqipped with a stirrer and a thermometer were added 300 g (0.300 mole) of ETERNACOLL (Registered Trademark) "UH-100" (a polycarbonate diol prepared using 1,6-hexanediol and a carbonic acid ester as raw materials, molar mass: 1000 g/mol, hydroxyl value: 112.2 mgKOH/g) manufactured by Ube Industries, Ltd. and 257 g of N-methylpyrrolidone, and stirred at a bath temperature of 60˚C, and then, at the same temperature, 259.47 g (0.989 mole) of Desmojule W (Registered Trademark) (4,4'-diisocyanatedicydohexylmethane) manufactured by Sumika Bayer Urethane Co., Ltd. was added and the temperature was elevated to 90˚C while stirring, and the mixture was stirred at the same temperature for 90 minutes (internal temperature: 80˚C to 85˚C). Then, 40.2 g (0.300 mole) of dimethylolpropionic acid and 0.69 g of dibutyltin dilaurate were added and the temperature was elevated to 95˚C while stirring (internal temperature: 90˚C to 95˚C). After 3 hours, the mixture was cooled to 80˚C, and 30.3 g (0.299 mole) of triethylamine was added to neutralize to obtain a polyurethane prepolymer. This polyurethane prepolymer solution was slowly added to water to disperse, and to this dispersion liquid was slowly added 122.88 g (0.370 mole) of aqueous 2-methylpentane-1,5-diamine solution at a concentration of 35% to cause a chain extension reaction to obtain an aqueous polyurethane resin dispersion.

[Comparative Example 2]

The aqueous polyurethane dispersion synthesized in Comparative Example 1 was coated on a glass plate as it is, and after drying at 60˚C for 30 minutes, the plate was fired at 120˚C for 3 hours to obtain a coated film of 50 μm.

(Hardness evaluation)

The hardness of the paint films prepared in Example 2 and Comparative Example 2 were evaluated by pendulum hardness. The results are shown in the following Table.

[Table 1]

| | Example 2 | Comparative Example 2 |
|---|---|---|
| Pendulum hardness (second) | 261 | 168 |

The polyurethane resin aqueous dispersion of the invention is excellent in dispersibility in an aqueous medium and in strength of the resultant paint film obtained by coating and drying the dispersion. Furthermore, since it has hydrolysis resistance, durability, heat resistance and wear resistance and is particularly excellent in hardness, it is useful as a raw material for a coating agent or a paint composition. Furthermore, according to the preparation process of the invention, it is possible to efficiently produce a polyurethane resin aqueous dispersion having the above-mentioned properties.

[Example 3]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.6 g) and isophorone diisocyanate (336 g) were heated in N-ethyl pyrrolidone (315 g) in the presence of dibutyltin dilaurate (0.6 g) under nitrogen atmosphere at 80 to 90˚C for 3. 5 hours. The content of NCO group when the urethanation reaction was completed was 5.27 wt %. The reaction mixture was cooled to 80˚C, and to this was added and mixed triethylamine (47.1 g). The reaction mixture (191 g) and a mixed solution of trimethylolpropane triacrylate (TMPTA) and tripropylene

glycol diacrylate (TPGDA) (weight ratio 1:1, 57.3 g) were mixed, and added to water (375 g) under vigorous stirring. Then, a 35 wt % aqueous 2-methyl-1,5-pentanediamine solution (32.3 g) was added to obtain an aqueous polyurethane resin dispersion.
The acryl equivalent of the radically polymerizable compound (a mixture of TMPTA and TPGDA) in Example 3 was 119.

[Example 4]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.4 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.23 wt %. The reaction mixture was cooled to 80˚C, and to this was added and mixed triethylamine (47.2 g). The reaction mixture (210 g) and a mixed solution of trimethylolpropane triacrylate (TMPTA) and polypropylene glycol diacrylate (PPGDA, the molecular weight of propylene glycol portion is approximately 400) (weight ratio 1:1, 34.5 g) were mixed and added to water (352 g) under vigorous stirring. Then, a 35 wt % aqueous 2-methyl-1,5-pentanediamine solution (35.5 g) was added to obtain an aqueous polyurethane resin dispersion.
The acryl equivalent of the radically polymerizable compound (a mixture of TMPTA and PPGDA) in Example 4 was 144.

[Example 5]

In a reactor equipped with a stirrer and a heater, ETERNACOLL (Registered Trademark) UM90(1/1) (manufactured by Ube Industries, Ltd.; number average molecular weight: 914; hydroxyl value: 123 mgKOH/g; 75.1 g of a polycarbonate diol obtained by reacting a carbonic acid ester with a polyol mixture in which molar ratio between the polyol components is 1,4-cyclohexane dimethanol:1,6-hexanediol = 1:1), 2,2-dimethylolpropionic acid (13.4 g) and isophorone diisocyanate (72.9 g) were heated in N-ethyl pyrrolidone (67.1 g) in the presence of dibutyltin dilaurate (0.1 g) under nitrogen atmosphere at 80 to 90˚C for 3.5 hours. The content of NCO group when the urethanation reaction was completed was 4.84 wt %. The reaction mixture was cooled to 80˚C, and to this was added and mixed triethylamine (9.9 g). The reaction mixture (189 g) and a mixed solution of trimethylolpropane triacrylate (TMPTA) and tripropylene glycol diacrylate (TPGDA) (weight ratio 1:1, 55.2 g) were mixed and added to water (373 g) under vigorous stirring. Then, a 35 wt % aqueous 2-methyl-1,5-pentanediamine solution (32.8 g) was added to obtain an aqueous polyurethane resin dispersion.
The acryl equivalent of the radically polymerizable compound (a mixture of TMPTA and TPGDA) in Example 5 was 119.

[Example 6]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol: 1,6-hexanediol = 3: 1), 2,2-dimethylolpropionic acid (62.4 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.24 wt %. The reaction mixture was cooled to 80˚C, and to this was added and mixed triethylamine (47.3 g). The reaction mixture (195 g) and a mixed solution of trimethylolpropane triacrylate (TMPTA) and dipropylene glycol diacrylate (DPGDA) (weight ratio 1:1, 57.8 g) were mixed and added to water (386 g) under vigorous stirring. Then, a 35 wt % aqueous 2-methyl-1,5-pentanediamine solution (33.0 g) was added to obtain an aqueous polyurethane resin dispersion.
The acryl equivalent of the radically polymerizable compound (a mixture of TMPTA and DPGDA) in Example 6 was 109.

[Example 7]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was

completed was 5.19 wt %. The reaction mixture was cooled to 80˚C, and to this was added and mixed triethylamine (47.0 g). The reaction mixture (180 g) and a mixed solution of trimethylolpropane triacrylate (TMPTA) and triethylene glycol diacrylate (TEGDA) (weight ratio 1:1, 53.1 g) were mixed and added to water (352 g) under vigorous stirring. Then, a 35 wt % aqueous 2-methyl-1,5-pentanediamme solution (30.2 g) was added to obtain an aqueous polyurethane resin dispersion.
The acryl equivalent of the radically polymerizable compound (a mixture of TMPTA and TEGDA) in Example 7 was 119.

[Example 8]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.4 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.24 wt %. The reaction mixture was cooled to 80˚C, and to this was added and mixed triethylamine (47.3 g). The reaction mixture (180 g) and a mixed solution oftrimethylolpropane triacrylate (TMPTA) and butanediol diacrylate (BGDA) (weight ratio 1:1, 52.5 g) were mixed and added to water (357 g) under vigorous stirring. Then, a 35 wt % aqueous 2-methyl-1,5-pentanediamine solution (30.3 g) was added to obtain an aqueous polyurethane resin dispersion.
The acryl equivalent of the radically polymerizable compound (a mixture of TMPTA and BGDA) in Example 8 was 99.

[Example 9]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (170 g) and a mixed solution of trimethylolpropane triacrylate (TMPTA) and hexanediol diacrylate (HDDA) (weight ratio 1:1, 50.5 g) were mixed and added to water (331 g) under vigorous stirring. Then, a 35 wt % aqueous
2-methyl-1,5-pentanediamine solution (29.0 g) was added to obtain an aqueous polyurethane resin dispersion.
The acryl equivalent of the radically polymerizable compound (a mixture of TMPTA and HDDA) in Example 9 was 105.

[Example 10]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (184 g) and a mixed solution oftripropylene glycol diacrylate (TPGDA) and Laromer 8863 (manufactured by BASF) (weight ratio 1:1, 53.5 g) were mixed and added to water (363 g) under vigorous stirring. Then, a 35 wt % aqueous 2-methyl-1,5-pentanediamine solution (31.4 g) was added to obtain an aqueous polyurethane resin dispersion.
The acryl equivalent of the radically polymerizable compound (a mixture of TPGDA and Laromer 8863) in Example 10 was 146.

[Example 11]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the

polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (179 g) and a mixed solution of trimethylolpropane triacrylate (TMPTA) and tripropylene glycol diacrylate (TPGDA) (weight ratio 1:5, 53.0 g) were mixed and added to water (355 g) under vigorous stirring. Then, a 35 wt % aqueous 2-methyl-1,5-pentanediamine solution (30.8 g) was added to obtain an aqueous polyurethane resin dispersion.
The acryl equivalent of the radically polymerizable compound (a mixture of TMPTA and TPGDA) in Example 11 was 138.

[Example 12]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.6 g) and isophorone diisocyanate (336 g) were heated in N-ethyl pyrrolidone (315 g) in the presence of dibutyltin dilaurate (0.6 g) under nitrogen atmosphere at 80 to 90˚C for 3.5 hours. The content of NCO group when the urethanation reaction was completed was 5.27 wt %. The reaction mixture was cooled to 80˚C, and to this was added and mixed triethylamine (47.1 g). The reaction mixture (191 g) and a mixed solution of trimethylolpropane triacrylate (TMPTA) and neopentyl glycol diacrylate (NPGDA) (weight ratio 1:5, 57.3 g) were mixed and added to water (375 g) under vigorous stirring. Then, a 35 wt % aqueous 2-methyl-1,5-pentanediamine solution (32.4 g) was added to obtain an aqueous polyurethane resin dispersion.
The acryl equivalent of the radically polymerizable compound in Example 12 (a mixture of TMPTA and NPGDA) was 105.

[Example 13]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (185 g) and a mixed solution of pentaerythritol tetraacrylate (PETA) and tripropylene glycol diacrylate (TPGDA) (weight ratio 1:5, 52.8 g) were mixed and added to water (362 g) under vigorous stirring. Then, a 35 wt % aqueous 2-methyl-1,5-pentanediamine solution (30.4 g) was added to obtain an aqueous polyurethane resin dispersion.
The acryl equivalent of the radically polymerizable compound (a mixture of PETA and TPGDA) in Example 13 was 143.

[Example 14]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3;1), 2,2-dimethylolpropionic acid (62.5 g) and isophorone diisocyanate (335 g) were heated in NEP (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (189 g) and a mixed solution of trimethylolpropane triacrylate (TMPTA) and polypropylene glycol diacrylate (TPGDA, the molecular weight of propylene glycol portion is approximately 700) (weight ratio 1:1, 55.3 g) were mixed and added to water (377 g) under vigorous stirring. Then, a 35 wt % aqueous 2-methyl-1,5-pentanediamine solution (32.2 g) was added to obtain an aqueous polyurethane resin dispersion.
The acryl equivalent of the radically polymerizable compound (a mixture of TMPTA and PPGDA) in Example 14 was 159.

[Comparative Example 3]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 161 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (29.1 g) and isophorone diisocyanate (157 g) were heated in N-ethyl pyrrolidone (151 g) in the presence of dibutyltin dilaurate (0.3 g) under nitrogen atmosphere at 80 to 90°C for 3.5 hours. The content of NCO group when the urethanation reaction was completed was 5.28 wt %. The reaction mixture was cooled to 80°C, and to this was added and mixed triethylamine (21.9 g). The reaction mixture (236 g) was added to water (306 g) under vigorous stirring. Then, a 35 wt % aqueous 2-methyl-1,5-pentanediamine solution (40.0 g) was added to obtain an aqueous polyurethane resin dispersion.

[Example 15]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 161 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (29.1 g) and isophorone diisocyanate (157 g) were heated in N-ethyl pyrrolidone (151 g) in the presence of dibutyltin dilaurate (0.3 g) under nitrogen atmosphere at 80 to 90°C for 3.5 hours. The content of NCO group when the urethanation reaction was completed was 5.28 wt %. The reaction mixture was cooled to 80°C, and to this was added and mixed triethylamine (21.9 g). The reaction mixture (210 g) and a mixed solution of trimethylolpropane triacrylate (TMPTA) and tripropylene glycol diacrylate (TPGDA) (weight ratio 1:1, 7.8 g) were mixed and added to water (283 g) under vigorous stirring. Then, a 35 wt % aqueous 2-methyl-1,5-pentanediamine solution (35.9 g) was added to obtain an aqueous polyurethane resin dispersion.
The acryl equivalent of the radically polymerizable compound (a mixture of TMPTA and TPGDA) in Example 15 was 119.

[Example 16]

In a reactor equipped with a stirrer and a heater, ETERNACOLL (Registered Trademark) UH100 (manufactured by Ube Industries, Ltd.; number average molecular weight: 1004; hydroxyl value: 112 mgKOH/g; 60.1 g of a polycarbonate diol obtained by reacting 1,6-hexanediol with a carbonic acid ester), 2,2-dimethylolpropionic acid (8.1 g) and isophorone diisocyanate (57.7 g) were heated in N-ethyl pyrrolidone (53.5 g) in the presence of dibutyltin dilaurate (0.1 g) under nitrogen atmosphere at 80°C for 4 hours. The content of NCO group when the urethanation reaction was completed was 4.94 wt %. The reaction mixture was cooled to 80°C, and to this was added and mixed triethylamine (8.1 g). The reaction mixture (174 g) and a mixed solution of trimethylolpropane triacrylate (TMPTA) and tripropylene glycol diacrylate (TPGDA) (weight ratio 1:1, 51.8 g) were mixed and added to water (349 g) under vigorous stirring. Then, a 35 wt % aqueous 2-methyl-1,5-pentanediamine solution (28.6 g) was added to obtain an aqueous polyurethane resin dispersion.
The acryl equivalent of the radically polymerizable compound (a mixture of TMPTA and TPGDA) in Example 16 was 119.

[Example 17]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.6 g) and isophorone diisocyanate (336 g) were heated in N-ethyl pyrrolidone (315 g) in the presence of dibutyltin dilaurate (0.6 g) under nitrogen atmosphere at 80 to 90°C for 3.5 hours. The content of NCO group when the urethanation reaction was completed was 5.27 wt %. The reaction mixture was cooled to 80°C, and to this was added and mixed triethylamine (47.1 g). The reaction mixture (191 g) and a mixed solution (weight ratio 1:1, 347 g) of trimethylolpropane triacrylate (TMPTA) and tripropylene glycol diacrylate (TPGDA) were mixed and added to water (1053 g) under vigorous stirring. Then, a 35 wt % aqueous 2-methyl-1,5-pentanediamine solution (32.2 g) was added to obtain an aqueous polyurethane resin dispersion.
The acryl equivalent of the radically polymerizable compound (a mixture of TMPTA and TPGDA) in Example 17 was 119.

[Example 18]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 165 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (29.5 g) and isophorone diisocyanate (160 g) were heated in N-ethyl pyrrolidone (151 g) in the presence of dibutyltin dilaurate (0.3 g) under nitrogen atmosphere at 80 to 90°C for 3 hours. Subsequently, 0.5 g each of 2,6-di-t-butyl-4-methyl phenol and 4-methoxy phenol were added. Furthermore, hydroxyethyl methacrylate (HEMA, 82.3g) was added and heated for 10 hours. The content of NCO group when the urethanation reaction was completed was 0.24 wt %. To the reaction mixture, triethylamine (22.1 g) was added and mixed. A prepolymer was obtained. The reaction mixture (550 g) and a mixed solution of trimethylolpropane triacrylate (TMPTA) and tripropylene glycol diacrylate (TPGDA) (weight ratio 1:1, 161 g) were mixed and added under vigorous stirring to water (1140 g) to obtain an aqueous polyurethane resin dispersion.
The acryl equivalent of the radically polymerizable compound (a mixture of TMPTA and TPGDA) in Example 18 was 119.

(Hardness evaluation)

The pencil hardness and pendulum hardness of films were measured and evaluated.

[Preparation of samples for pendulum hardness and pencil hardness]

To the respective aqueous polyurethane resin dispersions of Examples 3 to 18 and Comparative Example 3 was added 2 wt %/solid content of a polymerization initiator (IRGACURE500, manufactured by Ciba Specialty Co., Ltd.) and stirred well to obtain coating agents. They were uniformly coated on a glass plate so as to have a film thicknees of approximately 20 μm after drying. Then, drying at 60°C for 30 minutes, paint films (before UV irradiation) were obtained. After the resultant paint films were subjected to evaluation according to pendulum hardness measurement, they were passed under a 80 W metal halide lamp (one time irradiation, ultraviolet radiation intensity: 1000 mJ/cm$^2$). The resultant polyurethane resin paint films were subjected to pencil hardness measurement and pendulum hardness measurement.

[Pencil hardness measurement]

As scratch resistance evaluation, pencil hardness was measured.
On the respective resultant laminated bodies of the glass plates and polyurethane resin paint films, the pencil hardnesses of the respective resin paint films were measured by a method according to JIS K 5600-5-4.

[Pendulum hardness]

On the respective resultant laminated bodies of the glass plates and polyurethane resin paint films, the pencil hardnesses of the respective resin paint films were measured using a pendulum hardness meter (a pendulum hardness tester manufactured by BYK-Gardner GmbH) by measuring the amplitude attenuation time. The greater the amplitude attenuation time, the greater the hardness.

(Remaining percentage of volatile component)

Evaluation was made by measuring the weight of polyurethane resin films when prepared.

[Evaluation of remaining percentage of volatile component]

The respective aqueous polyurethane resin dispersions of Examples 3 to 18 and Comparative Example 3 were uniformly coated on a glass plate so as to have a film thicknees of approximately 20 μm after drying. The weights of the coated aqueous polyurethane resin dispersions were measured. Then, after drying at 60°C for 30 minutes, the weights of the resultant polyurethane resin films were measured, and the remaining content of volatile component in the respective paint films were calculated from the solid content concentration of the respective aqueous polyurethane resin dispersions using the formula below.
Calculation formula of the weight of volatile component:

(Weight of volatile component) = (Weight of film after drying) - (Weight of coated aqueous polyurethane resin dispersion) × (Solid content concentration (%)/100)

Calculation formula of remaining percentage of volatile component:

(Remaining percentage of volatile component)=[(Weight of volatile component)/(Weight of film after drying)] × 100

[Table 2]

| | Example 3 | Example 4 | Example 5 | Example 6 | Example 7 | Example 8 |
|---|---|---|---|---|---|---|
| UM90(3/1) (part by weight) | 43 | 43 | - | 43 | 43 | 43 |
| UM90(1/1) (part by weight) | - | - | 43 | - | - | - |
| UH100 (part by weight) | - | - | - | - | - | - |
| DMPA (part by weight) | 8 | 8 | 8 | 8 | 8 | 8 |
| IPDI (part by weight) | 41 | 41 | 41 | 41 | 41 | 41 |
| MPMD (part by weight) | 8 | 8 | 8 | 8 | 8 | 8 |
| Radically polymerizable compound (part by weight) | 41 | 22 | 40 | 41 | 40 | 40 |
| Radically polymerizable compound (wt %) | 29 | 18 | 29 | 29 | 29 | 29 |
| Radically polymerizable compound | TMPTA/ TPGDA | TMPTA/ PPGDA | TMPTA/ TPGDA | TMPTA/ DPGDA | TMPTA/ TEGDA | TMPTA/ BGDA |
| Radically polymerizable compound (ratio) | 1/1 | 1/1 | 1/1 | 1/1 | 1/1 | 1/1 |
| Storage stability (appearance) | ○ | ○ | ○ | ○ | ○ | ○ |
| Remaining percentage of volatile component (%) | 3 | 8 | 0 | 3 | 3 | 3 |
| Tackfree | ○ | ○ | ○ | ○ | ○ | ○ |
| Pendlum hardness (before irradiation, s) | 121 | 86 | 76 | 85 | 88 | 88 |
| Pendlum hardness (after irradiation, s) | 366 | 342 | 362 | 362 | 367 | 367 |
| Pencil hardness | H | F | H | H | H | H |

[Table 3]

| | Example 9 | Example 10 | Example 11 | Example 12 | Example 13 | Example 14 |
|---|---|---|---|---|---|---|
| UM90(3/1) (part by weight) | 43 | 43 | 43 | 43 | 43 | 43 |

(continued)

| | Example 9 | Example 10 | Example 11 | Example 12 | Example 13 | Example 14 |
|---|---|---|---|---|---|---|
| UM90(1/1) (part by weight) | - | - | - | - | - | - |
| UH100 (part by weight) | - | - | - | - | - | - |
| DMPA (part by weight) | 8 | 8 | 8 | 8 | 8 | 8 |
| IPDI (part by weight) | 41 | 41 | 41 | 41 | 41 | 41 |
| MPMD (part by weight) | 8 | 8 | 8 | 8 | 8 | 8 |
| Radically polymerizable compound (part by weight) | 41 | 41 | 40 | 41 | 39 | 40 |
| Radically polymerizable compound (wt %) | 29 | 29 | 29 | 29 | 28 | 29 |
| Radically polymerizable compound | TMPTA/ HDDA | Laromer/ TPGDA | TMPTA/ TPGDA | TMPTA/ NPGDA | PETA/ TPGDA | TMPTA/ PPGDA |
| Radically polymerizable compound (ratio) | 1/1 | 1/1 | 1/5 | 1/5 | 1/5 | 1/1 |
| Storage stability (appearance) | ○ | ○ | ○ | ○ | ○ | ○ |
| Remaining percentage of volatile component (%) | 3 | 3 | 3 | 3 | 3 | 3 |
| Tackfree | ○ | ○ | ○ | ○ | ○ | ○ |
| Pendlum hardness (before irradiation, s) | 75 | 54 | 75 | 182 | 76 | 41 |
| Pendlumhardness (after irradiation, s) | 365 | 347 | 358 | 379 | 360 | 246 |
| Pencil hardness | H | H | F | H | F | H |

[Table 4]

| | Comparative Example 3 | Example 15 | Example 16 | Example 17 | Example 18 |
|---|---|---|---|---|---|
| UM90(3/1) (part by weight) | 43 | 43 | - | 43 | 38 |
| UM90(1/1) (part by weight) | - | - | - | - | - |

(continued)

| | Comparative Example 3 | Example 15 | Example 16 | Example 17 | Example 18 |
|---|---|---|---|---|---|
| UH100 (part by weight) | - | - | 44 | - | - |
| DMPA (part by weight) | 8 | 8 | 6 | 8 | 7 |
| IPDI (part by weight) | 41 | 41 | 40 | 41 | 37 |
| MPMD (part by weight) | 8 | 8 | 8 | 8 | - |
| Radically polymerizable compound (part by weight) | 0 | 5 | 41 | 248 | 36 |
| Radically polymerizable compound (wt %) | 0 | 5 | 29 | 71 | 26 |
| Radically polymerizable compound | - | TMPTA/ TPGDA | TNDTA/ TPGDA | TMPTA/ TPGDA | TMPTA/ TPGDA |
| Radically polymerizable compound (ratio) | - | 1/1 | 1/1 | 1/1 | 1/1 |
| Storage stability (appearance) | ○ | ○ | ○ | × | ○ |
| Remaining percentage of volatile component (%) | 25 | 22 | 2 | 1 | 1 |
| Tackfree | ○ | ○ | ○ | × | × |
| Pendlum hardness (before irradiation, s) | 146 | 147 | 65 | - | 23 |
| Pendlum hardness (after irradiation, s) | - | 252 | 323 | - | 333 |
| Pencil hardness | <6B | B | B | 2H | H |

Parts by weight in the Tables show the parts by weight of each compound assuming that the total solid content in urethane resin is 100 parts by weight.
Wt % in the Tables shows the wt % of acryl compound assuming that the total solid content in the resin is 100 wt %.
Storage stability in the Tables shows the result of observation of change in appearance one week after production. Evaluation criteria are as follows.
○ : No change

× : aggregates are observed

Tackfree in the Tables indicates the results touching the paint films with fingers after drying at 60˚C for 30 minutes. Evaluation criteria are as follows.

○ : No change

× : Mark of fingers or fingerprints remained.

Pencil hardness "<6B" in the Tables shows that the pencil hardness is 6B or less, and scars are left even with a 6B pencil.

As shown in Tables 2 to 4, Examples 3 to 18 were superior in pencil hardness to Comparative Example 3 which contains no radically polymerizable compounds. In particular, Examples 3 to 14 and Example 18 in which a polycarbonate polyol having an alicyclic structure in a main chain is used and a radically polymerizable compound accounts for 10 to 50 wt %, are excellent, and among them, Examples 3 to 14 had a low remaining percentage of volatile components and were excellent in tackfree.

[Example 19]

In a reactor equipped with a stirrer and a heater, ETERNACOLL (Registered Trademark) UH100 (manufactured by Ube Industries, Ltd.; number average molecular weight: 1004; hydroxyl value: 112 mgKOH/g; 60.1 g of a polycarbonate diol obtained by reacting 1,6-hexanediol with a carbonic acid ester), 2,2-dimethylolpropionic acid (8.1 g) and isophorone diisocyanate (57.7 g) were heated in N-ethyl pyrrolidone (53.5 g) in the presence of dibutyltin dilaurate (0.1 g) under nitrogen atmosphere at 80˚C for 4 hours. The content of NCO group when the urethanation reaction was completed was 4.94 wt %. The reaction mixture was cooled to 80˚C, and to this was added and mixed triethylamine (8.1 g). The reaction mixture (174 g) and a mixed solution of trimethylolpropane triacrylate (TMPTA) and tripropylene glycol diacrylate (TPGDA) (weight ratio 1:1, 51.8 g) were mixed and added to water (349 g) under vigorous stirring. Then, a 35 wt % aqueous 2-methyl-1,5-pentanediamine solution (28.6 g) was added to obtain an aqueous polyurethane resin dispersion.

[Example 20]

In a reactor equipped with a stirrer and a heater, ETERNACOLL (Registered Trademark) UH200 (manufactured by Ube Industries, Ltd.; number average molecular weight: 1993; hydroxyl value: 56.3 mgKOH/g; 450 g of a polycarbonate diol obtained by reacting 1,6-hexanediol as a polyol component with a carbonic acid ester), 2,2-dimethylolpropionic acid (66.7 g) and isophorone diisocyanate (289 g) were heated in N-ethyl pyrrolidone (199 g) in the presence of dibutyltin dilaurate (0.7 g) under nitrogen atmosphere at 80 to 90˚C for 4 hours. The content of NCO group when the urethanation reaction was completed was 4.76 wt %. The reaction mixture was cooled to 80˚C, and to this was added and mixed triethylamine (101 g). The reaction mixture (185 g) and a mixed solution of trimethylolpropane triacrylate (TMPTA) and tripropylene glycol diacrylate (TPGDA) (weight ratio 1:3, 60.5 g) were mixed and added to water (457 g) under vigorous stirring. Then, a 35 wt % aqueous 2-methyl-1,5-pentanediamine solution (28.3 g) was added to obtain an aqueous polyurethane resin dispersion.

[Example 21]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (179 g) and a mixed solution oftrimethylolpropane triacrylate (TMPTA) and tripropylene glycol diacrylate (TPGDA) (weight ratio 1:5, 53.0 g) were mixed and added to water (355 g) under vigorous stirring. Then, a 35 wt % aqueous 2-methyl-1,5-pentanediamine solution (30.8 g) was added to obtain an aqueous polyurethane resin dispersion.

[Example 22]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.6 g) and isophorone diisocyanate (336 g) were heated in N-ethyl pyrrolidone (315 g) in the presence of dibutyltin dilaurate (0.6 g)

under nitrogen atmosphere at 80 to 90˚C for 3.5 hours. The content of NCO group when the urethanation reaction was completed was 5.27 wt %. The reaction mixture was cooled to 80˚C, and to this was added and mixed triethylamine (47.1 g). The reaction mixture (191 g) and a mixed solution of trimethylolpropane triacrylate (TMPTA) and tripropylene glycol diacrylate (TPGDA) (weight ratio 1:1, 57.3 g) were mixed and added to water (375 g) under vigorous stirring. Then, a 35 wt % aqueous 2-methyl-1,5-pentanediamine solution (32.3 g) was added to obtain an aqueous polyurethane resin dispersion.

[Example 23]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.4 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.24 wt %. The reaction mixture was cooled to 80˚C, and to this was added and mixed triethylamine (47.3 g). The reaction mixture (195 g) and a mixed solution oftrimethylolpropane triacrylate (TMPTA) and dipropylene glycol diacrylate (DPGDA) (weight ratio 1:1, 57.8 g) were mixed and added to water (386 g) under vigorous stirring. Then, a 35 wt % aqueous 2-methyl-1,5-pentanediamine solution (33.0 g) was added to obtain an aqueous polyurethane resin dispersion.

[Example 24]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (180 g) and a mixed solution oftrimethylolpropane triacrylate (TMPTA) and triethylene glycol diacrylate (TEGDA) (weight ratio 1:1, 53.1 g) were mixed and added to water (352 g) under vigorous stirring. Then, a 35 wt % aqueous 2-methyl-1,5-pentanediamine solution (30.2 g) was added to obtain an aqueous polyurethane resin dispersion.

[Example 25]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.4 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.24 wt %. The reaction mixture was cooled to 80˚C, and to this was added and mixed triethylamine (47.3 g). The reaction mixture (180 g) and a mixed solution oftrimethylolpropane triacrylate (TMPTA) and butanediol diacrylate (BGDA) (weight ratio 1:1, 52.5 g) were mixed and added to water (357 g) under vigorous stirring. Then, a 35 wt % aqueous 2-methyl-1,5-pentanediamine solution (30.3 g) was added to obtain an aqueous polyurethane resin dispersion.

[Example 26]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine

(47.0 g). The reaction mixture (170 g) and a mixed solution oftrimethylolpropane triacrylate (TMPTA) and hexanediol diacrylate (HDDA) (weight ratio 1:1, 50.5 g) were mixed and added to water (331 g) under vigorous stirring. Then, a 35 wt % aqueous 2-methyl-1,5-pentanediamine solution (29.0 g) was added to obtain an aqueous polyurethane resin dispersion.

[Example 27]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.6 g) and isophorone diisocyanate (336 g) were heated in N-ethyl pyrrolidone (315 g) in the presence of dibutyltin dilaurate (0.6 g) under nitrogen atmosphere at 80 to 90˚C for 3.5 hours. The content of NCO group when the urethanation reaction was completed was 5.27 wt %. The reaction mixture was cooled to 80˚C, and to this was added and mixed triethylamine (47.1 g). The reaction mixture (191 g) and a mixed solution of trimethylolpropane triacrylate (TMPTA) and neopentyl glycol diacrylate (NPGDA) (weight ratio 1:5, 57.3 g) were mixed and added to water (375 g) under vigorous stirring. Then, a 35 wt % aqueous 2-methyl-1,5-pentanediamine solution (32.4 g) was added to obtain an aqueous polyurethane resin dispersion.

[Example 28]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (185 g) and a mixed solution of pentaerythritol tetraacrylate (PETA) and tripropylene glycol diacrylate (TPGDA) (weight ratio 1:5, 52.8 g) were mixed and added to water (362 g) under vigorous stirring. Then, a 35 wt % aqueous 2-methyl-1,5-pentanediamine solution (30.4 g) was added to obtain an aqueous polyurethane resin dispersion.

[Example 29]

In a reactor equipped with a stirrer and a heater, ETERNACOLL (Registered Trademark) UH100 (manufactured by Ube Industries, Ltd.; number average molecular weight: 1004; hydroxyl value: 112 mgKOH/g; 360 g of a polycarbonate diol obtained by reacting 1,6-hexanediol with a carbonic acid ester), 2,2-dimethylolpropionic acid (62.5 g) and isophorone diisocyanate (327 g) were heated in N-ethyl pyrrolidone (186 g) in the presence of dibutyltin dilaurate (0.6 g) under nitrogen atmosphere at 80˚C for 4 hours. The content of NCO group when the urethanation reaction was completed was 5.57 wt %. To the reaction mixture was added and mixed triethylamine (46.9 g). The reaction mixture (157 g) and a mixed solution ofLaromer 8863 (manufactured by BASF) and tripropylene glycol diacrylate (TPGDA) (weight ratio 1: 1, 81.1 g) were mixed and added to water (438 g) under vigorous stirring. Then, a 35 wt % aqueous 2-methyl-1,5-pentanediamine solution (29.4 g) was added to obtain an aqueous polyurethane resin dispersion.

[Example 30]

In a reactor equipped with a stirrer and a heater, ETERNACOLL (Registered Trademark) UH100 (manufactured by Ube Industries, Ltd.; number average molecular weight: 1004; hydroxyl value: 112 mgKOH/g; 360 g of a polycarbonate diol obtained by reacting 1,6-hexanediol with a carbonic acid ester), 2,2-dimethylolpropionic acid (62.5 g) and isophorone diisocyanate (327 g) were heated in N-ethyl pyrrolidone (186 g) in the presence of dibutyltin dilaurate (0.6 g) under nitrogen atmosphere at 80˚C for 4 hours. The content of NCO group when the urethanation reaction was completed was 5.57 wt %. To the reaction mixture was added and mixed triethylamine (46.9 g). The reaction mixture (166 g) and a mixed solution of Laromer 8863 (manufactured by BASF) and tripropylene glycol diacrylate (TPGDA) (weight ratio 1: 3, 84.3 g) were mixed and added to water (463 g) under vigorous stirring. Then, a 35 wt % aqueous 2-methyl-1,5-pentanediamine solution (30.9 g) was added to obtain an aqueous polyurethane resin dispersion.

[Example 31]

In a reactor equipped with a stirrer and a heater, ETERNACOLL (Registered Trademark) UH200 (manufactured by Ube Industries, Ltd.; number average molecular weight: 1993; hydroxyl value: 56.3 mgKOH/g; 450 g of a polycarbonate diol obtained by reacting 1,6-hexanediol as a polyol component with a carbonic acid ester), 2,2-dimethylolpropionic acid (66.7 g) and isophorone diisocyanate (289 g) were heated in N-ethyl pyrrolidone (199 g) in the presence of dibutyltin dilaurate (0.7 g) under nitrogen atmosphere at 80 to 90˚C for 4 hours. The content of NCO group when the urethanation reaction was completed was 4.76 wt %. The reaction mixture was cooled to 80˚C, and to this was added and mixed triethylamine (101 g). The reaction mixture (168 g) and a mixed solution ofLaromer 8863(BASF) and tripropylene glycol diacrylate (TPGDA) (weight ratio 1:5, 56.1 g) were mixed and added to water (411 g) under vigorous stirring. Then, a 35 wt % aqueous 2-methyl-1,5-pentanediamine solution (25.6 g) was added to obtain an aqueous polyurethane resin dispersion.

[Example 32]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (183 g) and a mixed solution oftrimethylolpropane triacrylate (TMPTA) and polypropylene glycol diacrylate (PPGDA, the molecular weight of propylene glycol portion: approximately 400) (weight ratio 1:1, 54.0 g) were mixed and added to water (356 g) under vigorous stirring. Then, a 35 wt % aqueous 2-methyl-1,5-pentanediamine solution (31.1 g) was added to obtain an aqueous polyurethane resin dispersion.

[Example 33]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (189 g) and a mixed solution of trimethylolpropane triacrylate (TMPTA) and polypropylene glycol diacrylate (PPGDA, molecular weight of propylene glycol portion: approximately 700) (weight ratio 1:1, 55.3 g) were mixed and added to water (377 g) under vigorous stirring. Then, a 35 wt % aqueous 2-methyl-1,5-pentanediamine solution (32.2 g) was added to obtain an aqueous polyurethane resin dispersion.

[Example 34]

In a reactor equipped with a stirrer and a heater, ETERNACOLL (Registered Trademark) UM90(3/1) (manufactured by Ube Industries, Ltd.; number average molecular weight: 916; hydroxyl value: 122 mgKOH/g; 350 g of a polycarbonate diol obtained by reacting a carbonic acid ester with a polyol mixture in which molar ratio between the polyol components is 1,4-cyclohexane dimethanol:1,6-hexanediol = 3:1), 2,2-dimethylolpropionic acid (62.5 g) and isophorone diisocyanate (335 g) were heated in N-ethyl pyrrolidone (317 g) in the presence of dibutyltin dilaurate (0.6 g) under nitrogen atmosphere at 80 to 90˚C for 3.5 hours. The content of NCO group when the urethanation reaction was completed was 5.19 wt %. The reaction mixture was cooled to 80˚C, and to this was added and mixed triethylamine (47.0 g). The reaction mixture (184 g) and a mixed solution oftripropylene glycol diacrylate (TPGDA) and Laromer 8863 (manufactured by BASF) (weight ratio 1:1, 53.5 g) were mixed and added to water (363 g) under vigorous stirring. Then, a 35 wt % aqueous 2-methyl-1,5-pentanediamine solution (31.4 g) was added to obtain an aqueous polyurethane resin dispersion.

[Example 35]

In a reactor equipped with a stirrer and a heater, ETERNACOLL (Registered Trademark) UH100 (manufactured

by Ube Industries, Ltd.; number average molecular weight: 1004; hydroxyl value: 112 mgKOH/g; 360 g of polycarbonate diol obtained by reacting 1,6-hexanediol with a carbonic acid ester), 2,2-dimethylolpropionic acid (62.5 g) and isophorone diisocyanate (327 g) were heated in N-ethyl pyrrolidone (186 g) in the presence of dibutyltin dilaurate (0.6 g) under nitrogen atmosphere at 80˚C for 4 hours. The content of NCO group when the urethanation reaction was completed was 5.57 wt %. To the reaction mixture was added and mixed triethylamine (46.9 g). A prepolymer was obtained. The reaction mixture (159 g) and Laromer 8863 (manufactured by BASF, 81.5 g) were mixed and added under vigorous stirring to water (447 g). Then, a 35 wt % aqueous 2-methyl-1,5-pentanediamine solution (30.0 g) was added to obtain an aqueous polyurethane resin dispersion.

[Example 3b]

In a reactor equipped with a stirrer and a heater, ETERNACOLL (Registered Trademark) UH100 (manufactured by Ube Industries, Ltd.; number average molecular weight: 1004; hydroxyl value: 112 mgKOH/g; 360 g of a polycarbonate diol obtained by reacting 1,6-hexanediol with a carbonic acid ester), 2,2-dimethylolpropionic acid (62.5 g) and isophorone diisocyanate (327 g) were heated in N-ethyl pyrrolidone (186 g) in the presence of dibutyltin dilaurate (0.6 g) under nitrogen atmosphere at 80˚C for 4 hours. The content of NCO group when the urethanation reaction was completed was 5.57 wt %. To the reaction mixture was added and mixed triethylamine (46.9 g). A prepolymer was obtained. The reaction mixture (166 g) and tripropylene glycol diacrylate (TPGDA, 81.7 g) were mixed and added under vigorous stirring to water (450 g). Then, a 35 wt % aqueous 2-methyl-1,5-pentanediamine solution (30.0 g) was added to obtain an aqueous polyurethane resin dispersion.

(Hardness evaluation)

Evaluation was made by measuring pendulum hardness.

[Preparation of samples for pendulum hardness]

To the respective aqueous polyurethane resin dispersions of Examples 19 to 36, 2 wt %/solid content of a polymerization initiator (IRGACURE500, manufactured by Ciba Specialty Co., Ltd.) was added and stirred well to obtain a coating agent. They were uniformly coated on a glass plate so as to have a film thicknees of approximately 20 μm after drying. Then, paint films (before UV irradiation) were obtained by drying at 60˚C for 30 minutes. After the resultant paint films were subjected to evaluation according to pendulum hardness measurement, the glass plates were passed under a 80W metal halide lamp (one time irradiation, ultraviolet radiation intensity 1000 mJ/cm$^2$). The resultant polyurethane resin paint films were subjected to the evaluation of pendulum hardnessmeasurement.

[Pendulum hardness]

In the laiminate bodies of glass plates and polyurethane resin paint films, the hardnesses of resin paint films were measured by determining the respective amplitude attenuation times by a pendulum hardness meter (a pendulum hardness tester manufactured by BYK-Gardner GmbH). The greater the amplitude attenuation time, the greater the hardness.

[Table 5]

| | Example 19 | Example 20 | Example 21 | Example 22 | Example 23 | Example 24 | Example 25 | Example 26 | Example 27 | Example 28 |
|---|---|---|---|---|---|---|---|---|---|---|
| UH100 | 44 | - | - | - | - | - | - | - | - | - |
| UH200 | - | 52 | - | - | - | - | - | - | - | - |
| UM(3/1) | - | - | 43 | 43 | 43 | 43 | 43 | 43 | 43 | 43 |
| IPDI | 42 | 33 | 41 | 41 | 41 | 41 | 41 | 41 | 41 | 41 |
| DMPA | 6 | 8 | 8 | 8 | 8 | 8 | 8 | 8 | 8 | 8 |
| MPMD | 8 | 7 | 8 | 8 | 8 | 8 | 8 | 8 | 8 | 8 |
| TPGDA | 20 | 31 | 33 | 20 | - | - | - | - | - | 32 |
| DPGDA | - | - | - | - | 20 | - | - | - | - | - |
| TEGDA | - | - | - | - | - | 20 - | | - | - | - |
| BGDA | - | - | - | - | - | - | 20 | - | - | - |
| HGDA | - | - | - | - | - | - | - | 20 | - | - |
| NPGDA | - | - | - | - | - | - | - | - | 33 | - |
| PPGDA-400 | - | - | - | - | - | - | - | - | - | - |
| PPDGA-700 | - | - | - | - | - | - | - | - | - | - |
| TMPTA | 20 | 11 | 7 | 20 | 20 | 20 | 20 | 20 | 7 | - |
| Laromer | - | - | - | - | - | - | - | - | - | - |
| PETA | - | - | - | - | - | - | - | - | - | 7 |
| Bifunctional: Tri (Tetra) functional | 1:1 | 3:1 | 5:1 | 1:1 | 1:1 | 1:1 | 1:1 | 1:1 | 5:1 | 5:1 |
| Pendulum before irradiation | 65 | 60 | 75 | 121 | 85 | 88 | 88 | 75 | 182 | 76 |
| Pendulum after irradiation | 323 | 240 | 358 | 366 | 362 | 367 | 367 | 365 | 379 | 360 |

[Table 6]

| | Example 29 | Example 30 | Example 31 | Example 32 | Example 33 | Example 34 | Example 35 | Example 36 |
|---|---|---|---|---|---|---|---|---|
| UH100 | 44 | 44 | - | - | - | - | 43 | 44 |
| UH200 | - | - | 52 | - | - | - | - | - |
| UM(3/1) | - | - | - | 43 | 43 | 43 | - | - |
| IPDI | 40 | 40 | 33 | 41 | 41 | 41 | 41 | 40 |
| DMPA | 8 | 8 | 8 | 8 | 8 | 8 | 8 | 8 |
| MPMD | 8 | 8 | 7 | 8 | 8 | 8 | 8 | 8 |
| TPGDA | 31 | 46 | 35 | - | - | 20 | - | 60 |
| DPGDA | - | - | - | - | - | - | - | - |
| TEGDA | - | - | - | - | - | - | - | - |
| BGDA | - | - | - | - | - | - | - | - |
| HGDA | - | - | - | - | - | - | - | - |
| NPGDA | - | - | - | - | - | - | - | - |
| PPGDA-400 | - | - | - | 20 | - | - | - | - |
| PPDGA-700 | - | - | - | - | 20 | - | - | - |
| TMPTA | - | - | - | 20 | 20 | - | - | - |
| Laromer | 31 | 15 | 8 | - | - | 20 | 62 | - |
| PETA | - | - | - | - | - | - | - | - |
| Bifunctional: Tri(Tetra) functional | 1:1 | 3:1 | 3:1 | 1:1 | 1:1 | 11 | 0:1 | 1:0 |
| Pendulum before irradiation | 46 | 45 | 60 | 67 | 41 | 54 | 39 | 45 |
| Pendulum after irradiation | 274 | 257 | 189 | 318 | 246 | 347 | 202 | 256 |

Parts by weight in Table 5 and Table 6 show the parts by weight of each compound assuming that the total solid content in the urethane resin (containing no bifunctional(meth)acrylate compound and tri- or more-functional(meth) acrylate compound) is 100 parts by weight.
Bifunctional: Tri(Tetra)functional in Table 5 and Table 6 show the weight ratio of bifunctional acrylate and tri(tetra) functional acrylate.
As shown in Tables 5 and 6, the paint films in Examples 19 to 36 each have favorable hardness before and after irradiation, and in particular, from the comparison between Example 29 and Examples 35 to 36, it is understood that when bifunctional(meth)acrylate compounds and tri- or more-functional(meth)acrylate compounds are used in combination, excellent results can be obtained.

[Industrial Applicability]

The aqueous polyurethane resin dispersion of the invention can be used widely as a raw material or the like for paints and coating agents.

## Claims

1. An aqueous polyurethane resin dispersion containing at least a polyurethane resin and a radically polymerizable compound (C),
wherein the polyurethane resin is a polyurethane resin obtained by reacting at least a polycarbonate polyol (a); an acidic group-containing polyol (b); and an optional polyol (c) other than (a) and (b), with a polyisocyanate (d), and optionally further reacting with a chain extender (B).

2. The aqueous polyurethane resin dispersion according to claim 1, wherein the polycarbonate polyol (a) includes a polycarbonate polyol having an alicyclic structure in a main chain (al).

3. The aqueous polyurethane resin dispersion according to claim 2, wherein a content percentage of the alicyclic structure in the polycarbonate polyol (a) is 20 to 65 wt %.

4. The aqueous polyurethane resin dispersion according to any one of claims 1 to 3, wherein the radically polymerizable compound (C) is a (meth)acrylate compound.

5. The aqueous polyurethane resin dispersion according to any one of claims 1 to 4, wherein the radically polymerizable compound (C) includes a compound having a polyalkylene glycol structure.

6. The aqueous polyurethane resin dispersion according to any one of claims 1 to 5, wherein the radically polymerizable compound (C) includes a bifunctional (meth)acrylate compound (C1) and a tri- or more-functional (meth)acrylate compound (C2).

7. The aqueous polyurethane resin dispersion according to any one of claims 1 to 6, wherein a content of the radically polymerizable compound (C) is 10 to 50 wt % based on 100 wt % of a total solid content of the aqueous polyurethane resin dispersion.

8. The aqueous polyurethane resin dispersion according to any one of claims 1 to 7, substantially containing no protective colloid, emulsifier, nor surfactant.

9. The aqueous polyurethane resin dispersion according to any one of claims 1 to 8, wherein the polyurethane resin is a polyurethane resin obtained by reacting at least a polycarbonate polyol (a); an acidic group-containing polyol (b); and an optional polyol (c) other than (a) and (b), with a polyisocyanate (d) to afford a polyurethane prepolymer having no free-radically polymerizable unsaturated group, and further reacting with a chain extender (B).

10. The aqueous polyurethane resin dispersion according to any one of claims 1 to 9, containing a photo-initiator.

11. A paint composition containing an aqueous polyurethane resin dispersion according to any one of claims 1 to 10.

12. A coating agent composition containing an aqueous polyurethane resin dispersion according to any one of claims 1 to 10.

13. A process for preparing an aqueous polyurethane resin dispersion according to any one of claims 1 to 10 comprising:

    a step ($\alpha$1) of reacting a polycarbonate polyol (a), an acidic group-containing polyol (b), and an optional polyol (c) other than (a) and (b), with a polyisocyanate (d) to afford a polyurethane prepolymer (A),
    a step ($\beta$) of neutralizing the acidic group of the polyurethane prepolymer (A),
    a step ($\gamma$) of dispersing the polyurethane prepolymer (A) and a radically polymerizable compound (C) in an aqueous medium, and
    a step ($\delta$) of reacting the polyurethane prepolymer (A) with a chain extender (B) which is reactive to an isocyanate group of the polyurethane prepolymer (A) to afford an aqueous polyurethane resin.

**INTERNATIONAL SEARCH REPORT**

International application No. PCT/JP2010/062419

A. CLASSIFICATION OF SUBJECT MATTER
*C08G18/65*(2006.01)i, *C08G18/44*(2006.01)i, *C08L75/04*(2006.01)i, *C09D4/06*(2006.01)i, *C09D5/02*(2006.01)i, *C09D175/04*(2006.01)i

According to International Patent Classification (IPC) or to both national classification and IPC

B. FIELDS SEARCHED

Minimum documentation searched (classification system followed by classification symbols)
C08G18/00-18/87, C08L75/00-75/16, C09D4/00-4/06, C09D5/02, C09D175/00-75/16, C08F290/00-290/14, C08F299/00-299/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-307215 A (Bayer MaterialScience AG.), 09 November 2006 (09.11.2006), claims 1 to 3; paragraphs [0011], [0023], [0032]; example 4 & US 2006/0240264 A1 & EP 1717257 A1 | 1,4-13<br>2-3 |
| X<br>Y<br>A | JP 2003-342335 A (Mitsui Takeda Chemicals, Inc.), 03 December 2003 (03.12.2003), claims 1 to 10; paragraphs [0056] to [0058]; example 5 & KR 10-2004-0030210 A & CN 1461770 A | 1,4-6,8-13<br>2-3<br>7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 October, 2010 (19.10.10) | 09 November, 2010 (09.11.10) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/062419

C (Continuation). DOCUMENTS CONSIDERED TO BE RELEVANT

| Category* | Citation of document, with indication, where appropriate, of the relevant passages | Relevant to claim No. |
|---|---|---|
| Y | JP 6-248046 A (Toagosei Chemical Industry Co., Ltd.), 06 September 1994 (06.09.1994), claim 1; paragraph [0009] (Family: none) | 2-3 |
| A | JP 2005-8888 A (Bayer Material Science L.L.C.), 13 January 2005 (13.01.2005), claims & US 2005/0003102 A1 & US 2004/0259970 A1 & EP 1489120 A1 | 1-13 |
| A | JP 2009-523188 A (SSCP Co., Ltd.), 18 June 2009 (18.06.2009), claims & US 2009/0012201 A1 & EP 1971655 A & WO 2007/081186 A1 | 1-13 |
| P,A | WO 2010/004951 A1 (Ube Industries, Ltd.), 14 January 2010 (14.01.2010), claims (Family: none) | 1-13 |
| P,A | WO 2009/145242 A1 (Ube Industries, Ltd.), 03 December 2009 (03.12.2009), claims (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI10120757 B
- JP 2005281544 A
- JP HEI6248046 B
- JP 2008140474 A
- JP 2008180856 A
- JP 2008534710 A
- JP 2008248014 A